(19) Europäisches Patentamt
European Patent Office
Office européen des brevets

(11) **EP 4 717 718 A1**

(12) **EUROPEAN PATENT APPLICATION**

(43) Date of publication:
01.04.2026 Bulletin 2026/14

(21) Application number: 25204213.0

(22) Date of filing: 24.09.2025

(51) International Patent Classification (IPC):
C08G 18/08 (2006.01)    C08G 18/12 (2006.01)
C08G 18/32 (2006.01)    C08G 18/48 (2006.01)
C08G 18/75 (2006.01)    C09D 11/30 (2014.01)

(52) Cooperative Patent Classification (CPC):
(C-Sets available)
C08G 18/4854; C08G 18/0823; C08G 18/0866;
C08G 18/12; C08G 18/3228; C08G 18/3231;
C08G 18/4018; C08G 18/42; C08G 18/44;
C08G 18/758; C09D 11/102; C09D 11/30;
C09D 11/322; C09D 11/38; C09D 11/40    (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024168278
27.09.2024 JP 2024168275

(71) Applicant: Konica Minolta, Inc.
Tokyo 100-7015 (JP)

(72) Inventors:
• NITO, Ken
Tokyo, 100-7015 (JP)
• SUMITOMO, Hiroshi
Fukui, 910-8670 (JP)
• KIBE, Yoshinobu
Fukui, 910-8670 (JP)
• TSUJIAI, Yuzo
Fukui, 910-8670 (JP)
• NISHINO, Masakazu
Fukui, 910-8670 (JP)

(74) Representative: MFG Patentanwälte
Meyer-Wildhagen Meggle-Freund
Gerhard PartG mbB
Amalienstraße 62
80799 München (DE)

(54) **INKJET INK**

(57)    An inkjet ink is provided that includes a colorant being stably and highly dispersed, has excellent ejection stability (droplet formability and droplet recoverability), and can improve the texture and the rubbing fastness of a textile printed product.

An inkjet ink that includes a urethane resin including a constituent unit derived from (A) polyisocyanate, a constituent unit derived from (B) polyol, and a constituent unit derived from (C) polyamine and includes an organic solvent, wherein, (B) the polyol includes (B1) polyether polyol and (B2) diol compound having a carboxy group and/o a carboxylate group, (C) the polyamine includes (C1) first polyamine having two groups selected from an amino group, an imino group, and a hydrazide group and (C2) second polyamine having three or four groups selected from an amino group, an imino group, and a hydrazide group, and a mass ratio of the organic solvent to the urethane resin (a ratio of a mass of the organic solvent to a mass of the urethane resin) is 1.0 or more.

EP 4 717 718 A1

(52) Cooperative Patent Classification (CPC): (Cont.)

C-Sets
**C08G 18/12, C08G 18/3228;**
**C08G 18/12, C08G 18/3231**

**Description**

Background of the Invention

1. Technical Field

The present invention relates to an inkjet ink.

2. Description of Related art

As a recording method for a textile (a woven fabric or a nonwoven fabric), a screen textile printing method, a roller textile printing method, or the like has been conventionally used, but in recent years, inkjet textile printing has been widely performed in which an image is formed on a textile with an inkjet recording method, because of the short-time dyeing and the high production efficiency.

Inks for textile printing in inkjet textile printing include colorants including dyes and pigments. Using a pigment is more advantageous than using a dye from the viewpoint of high light resistance and unnecessity of a post-treatment such as washing. In textile printing using a pigment, it is important to physically fasten (fix) the pigment to fibers or the like in a textile. Therefore, for an inkjet ink composition for pigment textile printing, blending of a binder resin for fixing of a pigment to a textile has been studied. The binder resin is required not to impair the texture of a textile subjected to inkjet textile printing (hereinafter, referred to as textile printed product). For example, Japanese Patent No. 6776775 and Japanese Unexamined Patent Application Publication No. 2020-84013 disclose a textile printing inkjet ink composition using a relatively flexible urethane resin as a binder resin.

A textile printing method using an inkjet method also has its specific problem. In an inkjet method, the discharged ink is discharged in a form of a liquid column, and then flies in a form of droplets, but on the way, for example, this liquid column is separated for some reason, and thus a phenomenon may occur in which the liquid column is separated into main droplets and satellite droplets. If this phenomenon occurs, the image is transferred to an originally unintended place in the textile printed product, and thus the textile printed product print quality, which is also relative to the design (clarity) of the textile printed product, is impaired. With the aim of improving such droplet formability (suppressing satellite droplets), a study in terms of a print system has been conducted in Japanese Unexamined Patent Application Publication No. 2018-015974.

Summary of the Invention

In inkjet textile printing, using an inkjet ink composition including a urethane resin as a binder resin generally makes the textile texture flexible and satisfactory, but causes a problem of insufficient rubbing fastness due to the flexibility. That is, in a textile printed product, the texture and the rubbing fastness are in a trade-off relationship. Even using the inkjet ink composition proposed in Japanese Patent No. 6776775 or Japanese Unexamined Patent Application Publication No. 2020-84013, the texture and the rubbing fastness of the textile printed product cannot be said to be sufficient, and there is room for further improvement.

Many inkjet ink compositions for textile printing include a water-soluble organic solvent. Meanwhile, a urethane resin is easily dissolved in a water-soluble organic solvent. Therefore, in an inkjet ink composition including a urethane resin, the stability against a high shear force during ejection (ejection stability) tends to deteriorate. For example, in inkjet printing, if droplets ejected from an inkjet nozzle are separated to generate satellite droplets, the print quality of a textile printed product is impaired as described above. Furthermore, if drying of an inkjet ink composition is accelerated in an inkjet nozzle, clogging of the inkjet nozzle occurs, and thus droplets are not ejected, or droplets are not uniformly ejected to impair the print quality. Therefore, improvement in print quality requires ejection stability (excellent droplet formability and droplet recoverability) of an inkjet ink composition. Furthermore, it is considered that studying improvement in droplet formability with an approach different from the technique of Japanese Unexamined Patent Application Publication No. 2018-015974 also contributes to improvement in print quality of a textile printed product.

In an inkjet ink composition for pigment textile printing, a pigment is present in a dispersion state. Therefore, sedimentation of a pigment due to aggregation is a large problem. The sedimentation of a pigment due to aggregation causes clogging in an inkjet nozzle. From the viewpoint of discharge stability from an inkjet nozzle, a pigment is required to be stably and highly dispersed in an inkjet ink composition. Conventional inkjet ink compositions for pigment textile printing are not necessarily sufficient in terms of improving the ejection stability (excellent droplet formability and droplet recoverability) of each inkjet ink composition and the discharge stability from an inkjet nozzle, and there is room for further improvement.

The present invention has been made in view of such problems of the conventional techniques, and an object of the present invention is to provide an inkjet ink that includes a colorant being stably and highly dispersed, has excellent ejection stability (droplet formability and droplet recoverability), and can improve the texture and the rubbing fastness of a textile printed product.

An aspect of the present invention for solution of the above problems relates to an inkjet ink described in the following items [1] to [14].

To achieve at least one of the abovementioned objects, according to an aspect of the present invention, an inkjet ink reflecting one aspect of the present invention comprises the followings.

[1] An inkjet ink including:

a urethane resin including a constituent unit derived from (A) polyisocyanate, a constituent unit derived from (B) polyol, and a constituent unit derived from (C) polyamine; and
an organic solvent,

wherein,

(B) the polyol includes (B1) polyether polyol and (B2) diol compound having a carboxy group and/or a carboxylate group,
(C) the polyamine includes (C1) first polyamine having two groups selected from an amino group, an imino group, and a hydrazide group and (C2) second polyamine having three or four groups selected from an amino group, an imino group, and a hydrazide group,
a mass ratio of the organic solvent to the urethane resin (a ratio of a mass of the organic solvent to a mass of the urethane resin) is 1.0 or more.

[2] The inkjet ink according to the item [1], a content of the urethane resin is 5 mass% or more and 20 mass% or less with respect to a total mass of the inkjet ink.

[3] The inkjet ink according to the item [1] or [2], wherein the organic solvent contains a glycol-based solvent.

[4] The inkjet ink according to any one of the items [1] to [3], wherein the organic solvent contains a glycol-based solvent having an octanol/water partition coefficient of -1.80 or less.

[5] The inkjet ink according to any one of the items [1] to [4], a content of the organic solvent is 10 mass% or more and 50 mass% or less with respect to the total mass of the inkjet ink.

[6] The inkjet ink according to any one of the items [1] to [5], further including a colorant,
a mass ratio of the colorant to the urethane resin (a ratio of a mass of the colorant to the mass of the urethane resin) is 0.05 to 2.0.

[7] The inkjet ink according to any one of the items [1] to [6], wherein the urethane resin has an acid value of 5 mgKOH/g or more and less than 30 mgKOH/g.

[8] The inkjet ink according to any one of the items [1] to [7], wherein the second polyamine includes diethylenetriamine or triethylenetetramine.

[9] The inkjet ink according to any one of the items [1] to [8], wherein the polyether polyol includes polytetramethylene glycol.

[10] The inkjet ink according to any one of the items [1] to [9], wherein the urethane resin has a glass transition temperature of 0°C or lower.

[11] The inkjet ink according to any one of the items [1] to [10], wherein it is used for textile printing on a textile.

According to the present invention, an inkjet ink is provided that includes a colorant being stably and highly dispersed, has excellent ejection stability (droplet formability and droplet recoverability), and can improve the texture and the rubbing fastness of a textile printed product.

Detailed Description

Hereinafter, one or more embodiments of the present invention will be described. However, the scope of the invention is not limited to the disclosed embodiments. Therefore, all of other forms, methods of use, operational techniques, and the like that are implementable and conceivable by those skilled in the art without departing from the gist of the present invention are included in the scope and the gist of the present invention, and are included in the invention described in the claims and the scope of equivalents thereof. The embodiments described in the present specification can be combined as appropriate to form other embodiments. In the present specification, the expression "X to Y" indicating a range means "X or more and Y or less", and pairs of the words "weight" and "mass", "wt%" and "mass%", and "parts by weight" and "parts by mass" are each treated as synonyms. In the present specification, the expression "A and/or B" refers to "A or B" and "A and B". In the present specification, the term "(meth)acryl" refers to both acryl and methacryl. Thus, for example, the term "(meth)acrylic acid" refers to both acrylic acid and methacrylic acid. Similarly, the term "(meth)acrylate" refers to both acrylate and methacrylate, and the term "(meth)acrylamide" refers to both acrylamide and methacrylamide. In the present specification, unless otherwise specified, an operation and measurement of a physical property or the like are performed under conditions of room temperature (20°C or higher and 25°C or lower) and a relative humidity of 40 %RH or more and 50 %RH or less.

<<Inkjet Ink>>

An embodiment of the present invention is an inkjet ink that includes a urethane resin including a constituent unit derived from (A) polyisocyanate, a constituent unit derived from (B) polyol, and a constituent unit derived from (C) polyamine and an organic solvent, wherein, (B) the polyol includes (B1) polyether polyol and (B2) diol compound having a carboxy group and/or a carboxylate group, (C) the polyamine includes (C1) first polyamine having two groups selected from an amino group, an imino group, and a hydrazide group and (C2) second polyamine having three or four groups selected from an amino group, an imino group, and a hydrazide group, and the inkjet ink has a mass ratio of the organic solvent to the urethane resin (a ratio of a mass of the organic solvent to a mass of the urethane resin) of 1.0 or more. An inkjet ink having such a constitution (hereinafter, also referred to as "inkjet ink according to the present embodiment", "ink according to the present embodiment", or "ink") includes a colorant being stably and highly dispersed, has excellent ejection stability (droplet formability and droplet recoverability), and can improve the texture and the rubbing fastness of a textile printed product.

The mechanism by which the ink according to the present embodiment produces the above-described effects is considered as follows. A urethane resin is a relatively flexible resin, and therefore may improve the texture when used as a binder in an inkjet ink, but tends to cause poor rubbing fastness due to the flexibility. In view of the above, it has been found that combination use of the first polyamine and the second polyamine as extenders improves both the texture and the rubbing fastness in an inkjet ink. In the ink according to the present embodiment, the urethane resin is prepared with an emulsion polymerization method and thus formed into an aqueous dispersion. Therefore, the urethane resin becomes particulate (hereinafter, a urethane resin dispersed in the form of particles is referred to as "urethane resin particles" or "resin particles") and maintains its dispersibility by a dispersing group appearing on the surface. However, in a urethane resin, some monomers may remain, or a low-molecular-weight product resulting from an insufficient polymerization reaction may be generated, and these are easily dissolved in an organic solvent and thus may be eluted from the inside of the resin particles to an external phase (an external phase of the particles). An inkjet ink including such urethane resin particles has a problem of viscosity variation caused by a reduction in the dispersion stability during long-term storage even if the ink exhibits good dispersibility in a normal storage state. At the time of ejection by an inkjet head, a high shear force is likely to be applied to an inkjet ink. It has been confirmed that this high shear force easily deforms the shape of urethane resin particles and thus the hydrophobic moiety of the urethane resin is exposed on the surface, the dispersibility is reduced, and the urethane resin particles aggregate to cause a problem of a reduction in the ejection stability of an inkjet head. For example, the problem of ejection stability results in that the shape of inkjet ink droplets formed at the time of ejection becomes unstable, the discharge speed of droplets is greatly reduced in use after intermittence, or discharge becomes impossible.

In the present invention, it has been found that if the amount of the organic solvent used in the inkjet ink is set to 1 or more with respect to the amount of the urethane resin, the urethane resin particles can keep a stable dispersion state at the time of inkjet ejection. That is, it has been found that a certain specific relationship between the amount of the organic solvent and the amount of the urethane resin effectively acts on maintenance of the dispersion state of the urethane resin particles. In the ink according to the present embodiment, the dispersion stability of the urethane resin in the inkjet ink is improved by setting the amount of the organic solvent to 1 or more with respect to the amount of the urethane resin. Thus, the dispersion state of the urethane resin in the inkjet ink is less likely to change, resulting in high long-term stability. It is also presumed that even if a high shear force is applied to the inkjet ink, aggregation of the resin particles can be suppressed and the ejection stability can be improved. As described above, the inkjet ink according to the present embodiment includes a colorant and urethane resin particles in a state of being stably and highly dispersed, has excellent ejection stability (droplet formability and droplet recoverability), and can improve the texture and the rubbing fastness of a textile printed product. Note that the above-described mechanism is an assumption, and the technical scope of the present invention is not limited to the above-described mechanism.

In the present specification, the term "inkjet ink" means a composition including a urethane resin or urethane resin particles (aqueous urethane resin dispersion), and is used in a meaning including a composition that contains an organic solvent or the like and thus becomes liquid (ink-like).

The ink according to the present embodiment may be an inkjet ink including a colorant. The ink according to the present embodiment includes a colorant and thus exhibits an effect of the present invention. The ink according to the present embodiment including a pigment as the colorant further exhibits an effect of the present invention.

[Urethane Resin]

The ink according to the present embodiment includes a urethane resin. The urethane resin (also referred to as "polyurethane resin") may function as a binder resin for fixing of a colorant that may be included in the inkjet ink to fibers. The ink according to the present embodiment includes a urethane resin, and therefore can form a printed material (for example, a textile printed product) having a good texture and excellent rubbing fastness when applied to the surface of a base material (recording medium), a recorded product, or the like (for example, the surface of a textile).

In the ink according to the present embodiment, the urethane resin includes a constituent unit derived from (A) polyisocyanate, a constituent unit derived from (B) polyol, and a onstituent unit derived from (C) polyamine, and (B) the polyol includes (B1) polyether polyol and (B2) diol compound having a carboxy group and/or a carboxylate group, and (C) the polyamine includes (C1) first polyamine having two groups selected from an amino group, an imino group, and a hydrazide group and (C2) second polyamine having three or four groups selected from an amino group, an imino group, and a hydrazide group.

The urethane resin according to the present embodiment is preferably in the form of a resin dispersion in which the urethane resin is dispersed in water (that is, an aqueous urethane resin dispersion). The structures of the urethane resin and the aqueous urethane resin dispersion will be described in detail below.

As described above, the urethane resin according to the present embodiment is preferably in the form of being dispersed in water. Therefore, the aqueous urethane resin dispersion includes the urethane resin including a constituent unit derived from (A) polyisocyanate, a constituent unit derived from (B) polyol, and a constituent unit derived from (C) polyamine; and water; wherein, (B) the polyol includes (B1) the polyether polyol and (B2) the diol compound having a carboxy group and/or a carboxylate group, and (C) the polyamine includes (C1) the first polyamine having two groups selected from an amino group, an imino group, and a hydrazide group and (C2) the second polyamine having three or four groups selected from an amino group, an imino group, and a hydrazide group.

(A) Polyisocyanate

The urethane resin according to the present embodiment includes the constituent unit derived from (A) polyisocyanate. The polyisocyanate is not particularly limited, and examples of the polyisocyanate include aromatic polyisocyanate compounds, aliphatic polyisocyanate compounds, and alicyclic polyisocyanate compounds. Examples of the aromatic polyisocyanate compounds include toluene diisocyanate (TDI), xylylene diisocyanate (XDI), diphenylmethane diisocyanate (MDI), naphthalene diisocyanate (NDI), and tetramethylxylylene diisocyanate. Examples of the aliphatic polyisocyanate compounds include alkylene diisocyanates such as hexamethylene diisocyanate (HDI). Here, the number of carbon atoms of the alkylene in the alkylene diisocyanate is preferably 2 to 10, 3 to 9, 4 to 8, or 5 to 7. Examples of the alicyclic polyisocyanate compounds include cycloalkylene diisocyanates and dicycloalkylalkane diisocyanates. Here, the number of carbon atoms of the cycloalkyl in the dicycloalkylalkane diisocyanate is preferably 5 to 8, and the number of carbon atoms of the alkane in the dicycloalkylalkane diisocyanate is preferably 1 to 4 or 1 to 3. Specific examples of the alicyclic polyisocyanate compounds include 1,3-bis(isocyanatomethyl)cyclohexane, isophorone diisocyanate (IPDI), dicyclohexylmethane diisocyanate (H12MDI), and norbornane diisocyanate. Therefore, according to one embodiment of the present invention, the polyisocyanate is one or more diisocyanate compounds selected from the group consisting of aromatic diisocyanate compounds, aliphatic diisocyanate compounds, and alicyclic diisocyanate compounds. These polyisocyanate compounds can be used singly or in combination of two or more kinds thereof.

(B) Polyol

The urethane resin according to the present embodiment includes the constituent unit derived from (B) polyol, and (B) the polyol includes (B1) the polyether polyol and (B2) the diol compound having a carboxy group and/or a carboxylate group.

(B1) Polyether Polyol

In one embodiment of the present invention, examples of (B1) the polyether polyol include polyalkylene ether glycols. The number of carbon atoms of the alkylene in the polyalkylene ether glycol is preferably 2 to 6, 2 to 5, or 3 or 4. Such an alkylene may be linear or branched. Specific examples of (B1) the polyether polyol include polyethylene glycol, polypropylene glycol, polytetramethylene glycol, and polyols including block or random copolymers thereof.

In one embodiment of the present invention, (B1) the polyether polyol may have a number-average molecular weight of 500 to 5,000, 1,000 to 4,000, or 1,500 to 3,000. The number-average molecular weight was calculated with the following formula using the hydroxyl value of (B1) the polyether polyol. The hydroxyl value was determined in accordance with the A method in JIS K 1557-1:2007. Note that the number-average molecular weights of the polyester polyols and the polycarbonate polyols described below are also measured and calculated with similar methods.

$$\text{Number-average molecular weight} = 56110 \times \text{number of functional groups of polyol/hydroxyl value}$$

In one embodiment of the present invention, (B) the polyol may include at least one selected from a polyester polyol, a polycarbonate polyol, and a low molecular weight polyhydric alcohol, as long as the performance of the present invention is not impaired. Here, the low molecular weight polyhydric alcohol may have a number-average molecular weight (molecular weight) of less than 500 or 400 or less.

In one embodiment of the present invention, examples of the polycarbonate polyol include those obtained by a dealcoholization reaction, a dephenolization reaction, or the like between: one or more polyols selected from ethylene oxide or propylene oxide adducts of ethylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, diethylene glycol, dipropylene glycol, 1,4-cyclohexanedimethanol, or bisphenol A, trimethylolpropane, glycerin, pentaerythritol, and the like; and one or more carbonates selected from diethylene carbonate, dimethyl carbonate, diethyl carbonate, diphenyl carbonate, and the like. The polycarbonate polyols can be used singly or in combination of two or more kinds thereof.

In one embodiment of the present invention, examples of the polyester polyol include those obtained by a polycondensation reaction between: one or more dibasic acids selected from phthalic acid, isophthalic acid, terephthalic acid, naphthalenedicarboxylic acid, succinic acid, malonic acid, adipic acid, sebacic acid, 1,4-cyclohexyldicarboxylic acid, maleic acid, fumaric acid, and the like; and one or more polyols used in synthesis of the above-described polycarbonate polyols. The polyester polyols can be used singly or in combination of two or more kinds thereof.

In one embodiment of the present invention, the polycarbonate polyol and the polyester polyol may each independently have a number-average molecular weight of 500 to 5,000, 1,000 to 4,000, or 1,500 to 3,000.

In one embodiment of the present invention, examples of the low molecular weight polyhydric alcohol include ethylene glycol, 1,4-butanediol, 1,6-hexanediol, trimethylolpropane, pentaerythritol, and sorbitol.

In one embodiment of the present invention, the mass of (B1) the polyether polyol is 40 mass% or more, 50 mass% or more, 60 mass% or more, 70 mass% or more, 80 mass% or more, or 90 mass% or more (the upper limit is 100 mass%) with respect to the total mass of (B1) the polyether polyol included in (B) and the polycarbonate polyol and the polyester polyol that may be included in (B). Achieving such a lower limit improves the droplet formability.

In one embodiment of the present invention, the total number of moles of the low molecular weight polyhydric alcohol is 50 mol% or less, 40 mol% or less, 38 mol% or less, 30 mol% or less, 20 mol% or less, 10 mol% or less, 5 mol% or less, or 1 mol% or less (the lower limit is 0 mol%) with respect to the total number of moles of (B) the polyol. Achieving such an upper limit improves the flexibility of a urethane resin to be obtained and the texture of a printed material.

In one embodiment of the present invention, the total mass of the low molecular weight polyhydric alcohol is 5.0 mass% or less, 4.0 mass% or less, 3.4 mass% or less, 3.0 mass% or less, or 1.0 mass% or less (the lower limit is 0 mass%) with respect to the total mass of (B) the polyol. Achieving such an upper limit improves the flexibility of a urethane resin to be obtained and the texture of a printed material.

Note that (B1) the polyether polyol included in (B) and the polycarbonate polyol and the polyester polyol that may be included in (B) usually have neither a carboxy group nor a carboxylate group.

(B2) Diol Compound Having Carboxy Group and/or Carboxylate Group

In one embodiment of the present invention, the urethane resin of the present invention includes the constituent unit derived from (B2) the diol compound having a carboxy group and/or a carboxylate group. Here, the urethane resin is generally hydrophobic (lipophilic), and is not aqueous (water-dispersible). In one embodiment of the present invention, the urethane resin has a carboxylate group. According to such an embodiment, the urethane resin contained in the aqueous urethane resin dispersion according to the present embodiment may have an aqueous property (dispersibility in water). In one embodiment of the present invention, the number of groups selected from a carboxy group and a carboxylate group contained in one molecule of (B2) is one, two, or three.

In one embodiment of the present invention, one molecule of (B2) has one alkyl group. The number of carbon atoms of the alkyl group is preferably 1 to 6, or 1 or 2. The alkyl group is preferably linear. In one embodiment of the present invention, examples of (B2) include 2,2-dimethylolpropionic acid (DMPA), 2,2-dimethylolbutanoic acid (DMBA), and neutralized products thereof. Such diol compounds having a carboxy group and/or a carboxylate group can be used singly or in combination of two or more kinds thereof.

In one embodiment of the present invention, the total number of moles of (B1) and (B2) described above is 50 mol% or more, more than 50 mol%, 55 mol% or more, 60 mol% or more, 65 mol% or more, 70 mol% or more, 75 mol% or more, 80 mol% or more, 85 mol% or more, 90 mol% or more, or 95 mol% or more (the upper limit is 100 mol%) with respect to the total number of moles of (B) the polyol.

In one embodiment of the present invention, the number of moles of (B2) described above is more than 45 mol%, 47 mol% or more, or 49 mol% or more with respect to the total number of moles of (B) described above. In one embodiment of the present invention, the number of moles of (B2) described above is 70 mol% or less, 65 mol% or less, or 60 mol% or less with respect to the total number of moles of (B) described above. In one embodiment of the present invention, the number of moles of (B2) described above is more than 45 mol% and 70 mol% or less with respect to the total number of moles of (B) described above.

In one embodiment of the present invention, the total number of moles of the carboxylate group with respect to the total number of moles of the carboxylate group and the carboxy group in the urethane resin (so-called neutralization rate) is 40 mol% or more. In one embodiment of the present invention, the total number of moles of the carboxylate group with respect to the total number of moles of the carboxylate group and the carboxy group in the urethane resin is 40 to 100 mol% or 50 to 80 mol%. Examples of a method of making the urethane resin have a carboxylate group and setting the total number of moles of the carboxylate group with respect to the total number of moles of the carboxylate group and the carboxy group in the urethane resin to a certain lower limit or more include a method in which a diol compound having a carboxylate group is used as (B2) and as a raw material, a method in which a diol compound having a carboxylate group at least partially, which is obtained by neutralizing at least a part of carboxy groups of a diol compound having a carboxy group, is used as (B2) and as a raw material, and a method in which a diol compound having a carboxy group is used as (B2) and as a raw material, thus a prepolymer described below is obtained, and then neutralization is performed. In the present invention, the method in which a prepolymer is obtained and then neutralization is performed is preferable. Therefore, in one embodiment of the present invention, the urethane resin includes a constituent unit derived from a prepolymer including a constituent unit derived from (A) and a constituent unit derived from (B) and having an isocyanate group at the terminal. Details of the neutralization will be described below.

In one embodiment of the present invention, (B) does not include an aliphatic cyclic structure.

(C) Polyamine

The urethane resin according to the present embodiment includes the constituent unit derived from (C) polyamine, and (C) the polyamine includes (C1) the first polyamine having two groups selected from an amino group, an imino group, and a hydrazide group and (C2) the second polyamine having three or four groups selected from an amino group, an imino group, and a hydrazide group.

In one embodiment of the present invention, (C) the polyamine may be used as a chain extender of a prepolymer described below. As the chain extender, a compound having a hydroxy group is known as a trivalent chain extender in which the number of functional groups (the number of functional groups having active hydrogen) is three (such as trimethylolpropane or aminoethylethanolamine), but when such a chain extender is used, the chain extension becomes insufficient and the droplet formability tends to deteriorate, and therefore such a chain extender is preferably not used although use in combination with (C) is not limited.

The urethane resin according to the present embodiment includes the constituent unit derived from (C) polyamine, and (C) the polyamine includes (C1) the first polyamine having two groups selected from an amino group, an imino group, and a hydrazide group and (C2) the second polyamine having three or four groups selected from an amino group, an imino group, and a hydrazide group.

In one embodiment of the present invention, (C1) may be at least one of an alkylenediamine, a diamine having no carbon atom, or a diamine having a cycloalkane structure with 5 to 8 carbon atoms. In one embodiment of the present invention, the alkyl group of the alkylenediamine may have 1 to 12 carbon atoms. In one embodiment of the present invention, the diamine having a cycloalkane structure may be a diaminoalkyl cycloalkane. The number of carbon atoms of the alkyl in the diaminoalkyl cycloalkane may be 1 to 4, 1 to 3, or 1 or 2, and the number of carbon atoms of the cycloalkane in the diaminoalkyl cycloalkane may be 5 to 8, or 5 to 7.

In one embodiment of the present invention, examples of (C1) include: diamines such as ethylenediamine, 1,3-propanediamine, propylenediamine, 1,3-butanediamine, 1,4-butanediamine, 1,5-pentamethylenediamine, 1,6-hexamethylenediamine, diaminodicyclohexylmethane, hydrazine, piperazine, 2-methylpiperazine, isophoronediamine, norbornanediamine (bis(aminomethyl)norbornane), 1,3-bisaminocyclohexane, 1,3-bisaminomethylcyclohexane, 1,4-bisaminomethylcyclohexane, diaminodiphenylmethane, tolylenediamine, and xylylenediamine; amidoamines derived from a diprimary amine and a monocarboxylic acid; water-soluble amine derivatives such as monoketimine of a diprimary amine; and hydrazine derivatives such as oxalic acid dihydrazide, malonic acid dihydrazide, succinic dihydrazide, glutaric dihydrazide, adipic dihydrazide, sebacic dihydrazide, maleic dihydrazide, fumaric dihydrazide, itaconic dihydrazide, 1,1'-ethylenehydrazine, 1,1'-trimethylenehydrazine, and 1,1'-(1,4-butylene)dihydrazine. Among these, ethylenediamine, hydrazine, piperazine, isophoronediamine, 1,3-bisaminomethylcyclohexane, 1,4-bisaminomethylcyclohexane, and norboranediamine (bis(aminomethyl)norbornane) can be particularly preferably used. In one embodiment of the present invention, the hydrazine or the hydrazine derivative may be in the form of a hydrate.

In one embodiment of the present invention, (C2) is, for example, preferably represented by the general formula: $H_2N((CH_2)_nNH)_mH$ (wherein n is 2 to 6 and m is 2 or 3), and specific examples of (C2) include diethylenetriamine, triethylenetetramine, and iminobispropylamine. Among these, diethylenetriamine and triethylenetetramine can be particularly preferably used. According to one embodiment, (C2) the second polyamine includes diethylenetriamine or triethylenetetramine.

As described above, the urethane resin according to the present embodiment includes a constituent unit derived from (C1) the first polyamine having two groups selected from an amino group, an imino group, and a hydrazide group, and includes a constituent unit derived from (C2) the second polyamine having three or four groups selected from an amino group, an imino group, and a hydrazide group. Adopting such a constitution improves the droplet formability of an aqueous urethane resin dispersion to be obtained.

In one embodiment of the present invention, (C) may include a polyamine having five or more groups selected from an amino group and an imino group, polyethyleneimine, and the like. In one embodiment of the present invention, the total number of moles of (C1) and (C2) is 80 mol% or more, 85 mol% or more, 90 mol% or more, 95 mol% or more, or 98 mol% or more (the upper limit is 100 mol%) with respect to the total number of moles of (C). Achieving such a lower limit can improve the flexibility of a printed material. In one embodiment of the present invention, the total mass of (C1) and (C2) is 80 mass% or more, 85 mass% or more, 90 mass% or more, 95 mass% or more, or 98 mass% or more (the upper limit is 100 mass%) with respect to the total mass of (C). Achieving such a lower limit can improve the flexibility of a printed material.

In one embodiment of the present invention, the total number of moles of (C2) is 1.0 to 96.0 mol% with respect to the total number of moles of (C1) and (C2). Within such a range, both the droplet formability and the texture of a printed material can be more efficiently achieved. In one embodiment of the present invention, the total number of moles of (C2) is 2.0 mol% or more, 4.0 mol% or more, 6.0 mol% or more, 8.0 mol% or more, 10.0 mol% or more, 12.0 mol% or more, 20.0 mol% or more, 40.0 mol% or more, 60.0 mol% or more, 80.0 mol% or more, or 90.0 mol% or more with respect to the total number of moles of (C1) and (C2). In one embodiment of the present invention, the total number of moles of (C2) is 95.0 mol% or less, 85.0 mol% or less, 65.0 mol% or less, 55.0 mol% or less, 35.0 mol% or less, 25.0 mol% or less, 23.0 mol% or less, 18.0 mol% or less, 16.0 mol% or less, 14.0 mol% or less, 8.0 mol% or less, or 3.0 mol% or less with respect to the total number of moles of (C1) and (C2). In one embodiment of the present invention, the total number of moles of (C2) with respect to the total number of moles of (C1) and (C2) is preferably 4.0 to 65.0 mol% and more preferably 10.0 to 35.0 mol%.

In one embodiment of the present invention, the mass of (C2) is 2.0 to 98.0 mass% with respect to the total mass of (C1) and (C2). Within such a range, both the droplet formability and the texture of a printed material can be more efficiently achieved. In one embodiment of the present invention, the mass of (C2) is 3.0 mass% or more, 5.0 mass% or more, 10.0 mass% or more, 15.0 mass% or more, 20.0 mass% or more, 25.0 mass% or more, 30.0 mass% or more, 50.0 mass% or more, 70.0 mass% or more, or 90.0 mass% or more with respect to the total mass of (C1) and (C2). In one embodiment of the present invention, the mass of (C2) is 80.0 mass% or less, 60.0 mass% or less, 40.0 mass% or less, 30.0 mass% or less, 28.0 mass% or less, 20.0 mass% or less, 12.0 mass% or less, 8.0 mass% or less, or 4.0 mass% or less with respect to the total mass of (C1) and (C2). In one embodiment of the present invention, the mass of (C2) is preferably 2.0 to 98.0% by mass, more preferably 5.0 to 60.0% by mass and even more preferably 15.0 to 40.0% by mass with respect to the total mass of (C1) and (C2).

According to one embodiment, in the ink according to the present embodiment, the total number of moles of the functional groups (the amino group, the imino group, and the hydrazide group) of (C) is preferably 10 to 40 mol%, and more preferably 15 to 30 mol% with respect to the total number of moles of the isocyanate group of (A).

In one embodiment of the present invention, 65 mol% or more, 70 mol% or more, 80 mol% or more, or 90 mol% or more of the total number of moles of all constituent units included in the urethane resin consists of the constituent unit derived from (A), the constituent unit derived from (B1), the constituent unit derived from (B2), the constituent unit derived from (C1), and the constituent unit derived from (C2). In one embodiment of the present invention, preferably 65 mol% to 100 mol%, more preferably 70 mol% to 90 mol%, and even more preferably 75 mol% to 85 mol% of the total number of moles of all constituent units included in the urethane resin consists of a constituent unit derived from the (A), a constituent unit derived from the (B1), a constituent unit derived from the (B2), a constituent unit derived from the (C1), and a constituent unit derived from the (C2). According to one embodiment of the present invention, the urethane resin preferably includes substantially no crosslinkable group (for example, isocyanate group). According to one embodiment of the present invention, the urethane resin including substantially no isocyanate group can be obtained, for example, by using a chain extender so that no isocyanate group remains at the time of using the chain extender for chain extension of a terminal isocyanate group-containing urethane prepolymer.

In one embodiment of the present invention, the acid value of the urethane resin is 4 to 32 mgKOH/g, or 5 mgKOH/g or more and less than 30 mgKOH/g, from the viewpoint of storage stability, droplet formability, and texture (flexibility) of a printed material. The acid value can be calculated from the content of the carboxy group and the carboxylate group ($COO^-$) in the urethane resin. If the acid value of the urethane resin is less than 5 mgKOH/g, the storage stability of the aqueous urethane resin dispersion may be reduced, and if the acid value is 30 mgKOH/g or more, the texture of a printed material may deteriorate. The acid value of the urethane resin can be calculated as follows. The urethane resin is dissolved in N,N-dimethylformamide to prepare a measurement sample. The sample is subjected to potentiometric titration with a potassium hydroxide-ethanol titrant using an automatic potentiometric titrator (trade name "AT510", manufactured by Kyoto Electronics Manufacturing Co., Ltd.), and thus the acid value of the urethane resin can be measured.

In one embodiment of the present invention, the urethane resin has an acid value of 7 to 25 mgKOH/g, 10 to 24 mgKOH/g, 15 to 23 mgKOH/g, or 17 to 22 mgKOH/g. Within such a range, the storage stability, the droplet formability, and the texture (flexibility) of a printed material are further improved.

(Method of Producing Aqueous Urethane Resin Dispersion Containing Urethane Resin and Water)

The aqueous urethane resin dispersion containing the urethane resin according to the present embodiment and water can be produced, for example, as follows.

(Preparation of Prepolymer)

For example, (A) and (B) including (B1) and (B2), which reacts with (A), are reacted in amounts such that the number of isocyanate groups is larger to synthesize a prepolymer having an isocyanate group at the terminal. Here, the total number of moles of hydroxy groups included in (B) with respect to the total number of moles of isocyanate groups included in (A) is preferably 70 to 90 mol%. Within such a range, the viscosity of the isocyanate group-terminated prepolymer can be appropriate, resulting in easy emulsification, and the proportion of urethane bonds and urea bonds can be appropriate, so that excessive hardening of the urethane resin is suppressed and thus the flexibility and the film-forming property can be improved. A specific method of producing such an isocyanate group-terminated prepolymer is not particularly limited, and the prepolymer can be produced, for example, with a conventionally known one-stage method, that is, so-called one-shot method, a multistage isocyanate polyaddition reaction method, or the like. The reaction temperature at this time is preferably 40 to 150°C. The reaction time at this time is preferably 60 to 500 minutes. During the reaction or after completion of the reaction, a solvent that does not react with an isocyanate group can be added. Examples of such a solvent usable include acetone, methyl ethyl ketone, toluene, and tetrahydrofuran. At this time, as necessary, a reaction catalyst may be added such as dibutyltin dilaurate, stannous octoate, dibutyltin di-2-ethylhexoate, triethylamine, triethylenediamine, N-methylmorpholine, or bismuth tris(2-ethylhexanoate), or a reaction inhibitor may be added such as phosphoric acid, sodium hydrogen phosphate, p-toluenesulfonic acid, adipic acid, or benzoyl chloride.

(Neutralization)

In a case where the diol compound having a carboxylate group is not used as (B2), or in a case where the diol compound is used in an amount such that the urethane resin does not satisfy a predetermined neutralization rate, the carboxy group of the prepolymer can be neutralized using any neutralizer so that the urethane resin has a predetermined neutralization rate. As described above, neutralization of the isocyanate group-terminated prepolymer having a carboxy group can be performed using an appropriate known method before or after preparation of the isocyanate group-terminated prepolymer having a carboxy group. Examples of the neutralizer used for such neutralization include amines such trimethylamine, triethylamine, tri-n-propylamine, tributylamine, N-methyl-diethanolamine, dimethylaminoethanol (another name: N,N-dimethylmonoethanolamine, 2-(dimethylamino)ethanol), N,N-diethylmonoethanolamine, and triethanolamine, potassium hydroxide, sodium hydroxide, and ammonia. Among these, tertiary amines are particularly preferable such as trimethylamine, triethylamine, tri-n-propylamine, N,N-dimethylmonoethanolamine (2-(dimethylamino) ethanol), and tributylamine. It is preferable that the total number of moles of the carboxylate group with respect to the total number of moles of the carboxylate group and the carboxy group in a urethane resin to be obtained be 40 mol% or more. In one embodiment of the present invention, the total number of moles of the carboxylate group with respect to the total number of moles of the carboxylate group and the carboxy group in a urethane resin to be obtained is 40 to 100 mol% or 50 to 80 mol%.

(Emulsification)

Subsequently, the isocyanate group-terminated prepolymer is preferably emulsified and dispersed in water. An emulsification device used for the emulsification and dispersion in water is not particularly limited, and examples of the device include a homomixer, a homogenizer, and a disperser. In the emulsification and dispersion, the prepolymer is preferably emulsified and dispersed in water in a temperature range of 0 to 40°C without particularly using an emulsifier so as to minimize the reaction between the isocyanate group and water. In such emulsification and dispersion, as necessary, a reaction inhibitor can be added such as phosphoric acid, sodium dihydrogen phosphate, disodium hydrogen phosphate, p-toluenesulfonic acid, adipic acid, or benzoyl chloride.

(Chain Extension)

Subsequently, the prepolymer is contacted with (C), which may function as a chain extender, and, as necessary, another crosslinking agent to perform a chain extension reaction or a crosslinking reaction. For example, the terminal isocyanate group-containing urethane prepolymer emulsified and dispersed in water is subjected to chain extension using a chain extender. The reaction between the terminal isocyanate group-containing urethane prepolymer and (C) is usually completed at a reaction temperature of 20 to 50°C for 30 to 120 minutes after mixing of the terminal isocyanate group-containing urethane prepolymer and (C).

(Desolvation)

In the case of using an organic solvent in the above, the organic solvent is preferably removed. The removal conditions are desirably such that the solvent is distilled off under reduced pressure at 30 to 80°C.

The aqueous urethane resin dispersion according to the present embodiment contains water, and according to one embodiment of the present invention, the mass of the urethane resin (resin solid content (non-volatile content)) with respect to the total mass of the aqueous urethane resin dispersion is in the range of 20 to 60 mass%. The resin solid content concentration in the aqueous urethane resin dispersion can also be adjusted by adding or distilling off water.

According to such a production method via a prepolymer, a urethane resin can be obtained that includes a constituent unit derived from a prepolymer including the constituent unit derived from (A) and the constituent unit derived from (B) and having an isocyanate group at the terminal, and includes a constituent unit derived from (C) described above.

The volume-average particle size (d50) of the resin particles in the aqueous urethane resin dispersion is not particularly limited, and is preferably 300 nm or less, and more preferably 130 nm or less, from the viewpoint of suppressing nozzle clogging of an inkjet head. The lower limit of the volume-average particle size (d50) of the resin particles in the aqueous urethane resin dispersion may be, for example, 10 nm. According to one embodiment of the present invention, the volume-average particle size (d50) of the urethane resin is 10 nm to 300 nm or less. The volume-average particle size (d50) of the resin particles in the aqueous urethane resin dispersion is measured using a dynamic light scattering particle size distribution analyzer, and is the 50% particle size at which the cumulative volume fraction in the cumulative volume particle size distribution reaches 50% from the small particle size side.

In the aqueous urethane resin dispersion, the glass transition temperature (Tg) of the urethane resin is not particularly limited, and is preferably low from the viewpoint of suppressing hardening of a textile even after image formation and easily maintaining the texture. The Tg of the urethane resin is 0°C or lower, and preferably -80°C to 0°C. The Tg can be calculated as a temperature showing the peak (maximum value) in the temperature dependency of loss tangent (tan δ) that is the ratio (E''/E') of E' to loss modulus (E") measured by dynamic viscoelasticity measurement of a dried film (film-shaped sample) of the urethane resin dispersion.

The aqueous urethane resin dispersion according to the present embodiment includes the following aspects and embodiments.

[1] An aqueous urethane resin dispersion for inkjet inks that includes a urethane resin including a constituent unit derived from (A) polyisocyanate, a constituent unit derived from (B) polyol, and a constituent unit derived from (C) polyamine; and water; wherein, (B) the polyol includes (B1) polyether polyol and (B2) diol compound having a carboxy group and/or a carboxylate group, (C) the polyamine includes (C1) first polyamine having two groups selected from an amino group, an imino group, and a hydrazide group and (C2) second polyamine having three or four groups selected from an amino group, an imino group, and a hydrazide group;

[2] The aqueous urethane resin dispersion according to the item [1], wherein the urethane resin includes a constituent unit derived from a prepolymer including a constituent unit derived from (A) described above and a constituent unit derived from (B) described above and having an isocyanate group at the terminal, and includes a constituent unit derived from (C) described above;

[3] The aqueous urethane resin dispersion according to the item [1] or [2], wherein the urethane resin includes a carboxylate group;

[4] The aqueous urethane resin dispersion according to any one of the items [1] to [3], wherein a total number of moles of carboxylate groups with respect to a total number of moles of carboxylate groups and carboxy groups in the urethane resin is 40 mol% or more;

[5] The aqueous urethane resin dispersion according to any one of the items [1] to [4], wherein a total number of moles of (C2) described above with respect to a total number of moles of (C1) and (C2) described above is 1.0 to 96.0 mol%;

[6] The aqueous urethane resin dispersion according to any one of the items [1] to [5], wherein the urethane resin has an acid value of 5 mgKOH/g or more and less than 30 mgKOH/g;

[7] The aqueous urethane resin dispersion according to any one of the items [1] to [6], wherein a total number of moles of hydroxy groups included in (B) described above with respect to a total number of moles of isocyanate groups included in (A) described above is 70 to 90 mol%;

[8] The aqueous urethane resin dispersion according to any one of the items [1] to [7], wherein (B) described above does not include an aliphatic cyclic structure;

[9] The aqueous urethane resin dispersion according to any one of the items [1] to [8], wherein a total number of moles of (B1) and (B2) described above with respect to a total number of moles of (B) described above is 50 mol% or more;

[10] The aqueous urethane resin dispersion according to any one of the items [1] to [9], wherein the total number of moles of (C1) and (C2) with respect to a total number of moles of (C) described above is 80 mol% or more;

[11] The aqueous urethane resin dispersion according to any one of [1] to [10], wherein the (B1) polyether polyol is polyalkylene ether glycol, and the number of carbon atoms of alkylene in polyalkylene ether glycol is preferably 2 to 6, more preferably 2 to 5, even more preferably 2 to 4, and particularly preferably 3 or 4;

[12] The aqueous urethane resin dispersion according to any one of [1] to [11], wherein the mass of the (B1) polyether polyol with respect to the total mass of the (B1) polyether polyol contained in (B) and the polycarbonate polyol and the polyester polyol that may be contained in (B) is preferably 40 to 100% by mass, and more preferably 50 to 100% by mass;

[13] The aqueous urethane resin dispersion according to any one of [1] to [12], wherein the total number of moles of the low molecular polyhydric alcohol with respect to the total number of moles of the (B) polyol is preferably 0 to 50 mol%, and more preferably 0 to 40 mol%;

[14] The aqueous urethane resin dispersion according to any one of [1] to [13], wherein the total mass of the low molecular polyhydric alcohol with respect to the total mass of the (B) polyol is preferably 0 to 5.0% by mass, and more preferably 0 to 4.0% by mass;

[15] The aqueous urethane resin dispersion according to any one of [1] to [14], wherein the total number of moles of the (B1) and the (B2) with respect to the total number of moles of the (B) polyol is preferably 50 to 100 mol%, and more preferably 60 to 100 mol%;

[16] The aqueous urethane resin dispersion according to any one of [1] to [15], wherein the number of moles of the (B2) with respect to the total number of moles of the (B) is preferably more than 45 mol% to 70 mol% or less, more preferably 47 to 65 mol%, and particularly preferably 49 to 60 mol%;

[17] The aqueous urethane resin dispersion according to any one of [1] to [16], wherein the total number of moles of the carboxylate group with respect to the total number of moles of the carboxylate group and the carboxy group included in the urethane resin is preferably 40 to 100 mol%, and more preferably 50 to 80 mol%;

[18] The aqueous urethane resin dispersion according to any one of [1] to [17], wherein the total number of moles of (C1) and (C2) with respect to the total number of moles of (C) is preferably 80 to 100 mol%, more preferably 85 to 100 mol%, and even more preferably 90 to 100 mol%;

[19] The aqueous urethane resin dispersion according to any one of [1] to [18], wherein the total mass of (C1) and (C2) with respect to the total mass of (C) is preferably 80 to 100% by mass, more preferably 85 to 100% by mass, and even more preferably 90 to 100% by mass;

[20] The aqueous urethane resin dispersion according to any one of [1] to [19], wherein the total number of moles of (C2) with respect to the total number of moles of (C1) and (C2) is preferably 4.0 to 65 mol%, and more preferably 10 to 35 mol%;

[21] The aqueous urethane resin dispersion according to any one of [1] to [20], wherein the mass of (C2) with respect to the total mass of (C1) and (C2) is preferably 2.0 to 98.0% by mass, more preferably 5.0 to 60.0 by mass, and more preferably 15.0 to 40.0 by mass;

[22] The aqueous urethane resin dispersion according to any one of [1] to [21], wherein preferably 65 to 100 mol%, more preferably 70 to 90 mol%, and even more preferably 75 to 85 mol% of the total number of moles of all constituent units included in the urethane resin consists of a constituent unit derived from the (A), a constituent unit derived from the (B1), a constituent unit derived from the (B2), a constituent unit derived from the (C1), and a constituent unit derived from the (C2); and

[23] The aqueous urethane resin dispersion according to any one of the items [1] to [22], 65 mol% or more of a total number of moles of all constituent units of the urethane resin include the constituent unit derived from (A), a constituent unit derived from (B1) described above, a constituent unit derived from (B2) described above, a constituent unit derived from (C1) described above, and a constituent unit derived from (C2) described above.

The ink according to the present embodiment contains the aqueous urethane resin dispersion. According to one embodiment, in the ink according to the present embodiment, the content of the urethane resin is 1 mass% or more and 20 mass% or less, 2 mass% or more and 20 mass% or less, 3 mass% or more and 20 mass% or less, 5 mass% or more and 20 mass% or less, 1 mass% or more and 15 mass% or less, or 1 mass% or more and 10 mass% or less with respect to the total mass of the ink.

[Organic Solvent]

The ink according to the present embodiment includes an organic solvent. The organic solvent is to be an organic compound that is liquid at ordinary temperature and normal pressure (25°C, 1013 hPa), and is preferably a water-soluble organic solvent. The water-soluble organic solvent functions not only as a moisturizing agent but also as an anti-drying agent.

In the ink according to the present embodiment, the mass ratio of the organic solvent to the urethane resin (mass of organic solvent/mass of urethane resin) is 1.0 or more. If the value of mass of organic solvent/mass of urethane resin is 1.0 or more, the colorant and the urethane resin particles are stably and highly dispersed, and excellent ejection stability (droplet formability and droplet recoverability) can be exhibited. If the value of mass of organic solvent/mass of urethane resin is less than 1.0, the dispersibility of the colorant and the urethane resin particles at the time of ejection is reduced, and the stability of the ink is reduced. Furthermore, the droplet formability and/or the droplet recoverability is reduced.

In the ink according to the present embodiment, the mass ratio of the organic solvent to the urethane resin (mass of organic solvent/mass of urethane resin) is preferably 1.5 or more, more preferably 1.8 or more, still more preferably 2.0 or more, particularly preferably 2.3 or more, and most preferably 2.5 or more. In the ink according to the present embodiment, the mass ratio of the organic solvent to the urethane resin (mass of organic solvent/mass of urethane resin) is preferably 10 or less, more preferably 8.0 or less, still more preferably 7.0 or less, particularly preferably 6.0 or less, and most preferably 5.0 or less. That is, in the ink according to the present embodiment, the mass ratio of the organic solvent to the urethane resin (mass of organic solvent/mass of urethane resin) is preferably 1.5 or more and 10 or less, more preferably 1.8 or more and 8.0 or less, still more preferably 2.0 or more and 7.0 or less, particularly preferably 2.3 or more and 6.0 or less, and most preferably 2.5 or more and 5.0 or less. According to one embodiment, in the ink according to the present embodiment, the mass ratio of the organic solvent to the urethane resin (mass of organic solvent/mass of urethane resin) is more than 2.1, 2.2 or more, more than 2.3, or 2.4 or more. According to one embodiment, in the ink according to the present embodiment, the mass ratio of the organic solvent to the urethane resin (mass of organic solvent/mass of urethane resin) is less than 5.0, 4.5 or less, 4.0 or less, 3.5 or less, or 3.0 or less. If the mass ratio of the organic solvent to the urethane resin is within the above range, the colorant and the urethane resin particles can be more stably and highly dispersed, and more excellent ejection stability (droplet formability and droplet recoverability) can be exhibited.

Examples of the water-soluble organic solvent include:

alcohol-based solvents such as methanol, ethanol, n-propyl alcohol, isopropyl alcohol, n-butyl alcohol, sec-butyl alcohol, tert-butyl alcohol, isobutyl alcohol, and n-pentanol;

alkoxy alcohol-based solvents such as 3-methoxy-3-methyl-1-butanol, 1-methoxy-2-propanol (propylene glycol monomethyl ether), and 3-methoxy-n-butanol;

diol-based solvents such as ethylene glycol, propylene glycol, diethylene glycol, dipropylene glycol, 1,3-propanediol, isobutylene glycol, triethylene glycol, tripropylene glycol, tetraethylene glycol, 1,2-propanediol, 1,3-propanediol, 2-methyl-1,2-propanediol, 1,2-butanediol, 1,3-butanediol, 1,4-butanediol, 1,2-pentanediol, 1,3-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol;

triols such as glycerin, trimethylolethane, trimethylolpropane, and 1,2,6-hexanetriol;

tetrahydric alcohol-based solvents such as diglycerin, mesoerythritol, and pentaerythritol;

monoalkyl ether-based solvents of polyhydric alcohols, such as ethylene glycol monomethyl ether, diethylene glycol monomethyl ether, triethylene glycol monomethyl ether, propylene glycol monomethyl ether (3-methoxy-1-butanol), dipropylene glycol monomethyl ether, tripropylene glycol monomethyl ether, tetraethylene glycol monomethyl ether, ethylene glycol monoethyl ether, diethylene glycol monoethyl ether, triethylene glycol monoethyl ether, propylene glycol monoethyl ether, dipropylene glycol monoethyl ether, tripropylene glycol monoethyl ether, tetraethylene glycol monoethyl ether, ethylene glycol mono-n-butyl ether, diethylene glycol mono-n-butyl ether, triethylene glycol mono-n-butyl ether, propylene glycol mono-n-butyl ether, dipropylene glycol mono-n-butyl ether, tripropylene glycol mono-n-butyl ether, and tetraethylene glycol mono-n-butyl ether;

dialkyl ether-based solvents of polyhydric alcohols, such as diethylene glycol dimethyl ether, diethylene glycol diethyl ether, diethylene glycol ethyl methyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol dimethyl ether, propylene glycol diethyl ether, propylene glycol ethyl methyl ether, dipropylene glycol dimethyl ether, dipropylene glycol diethyl ether, dipropylene glycol ethyl methyl ether, tripropylene glycol dimethyl ether, tripropylene glycol diethyl ether, and tripropylene glycol ethyl methyl ether;

ketone-based solvents and ketoalcohol-based solvents such as acetone, methyl ethyl ketone, diacetone alcohol, and texanol ((3-hydroxy-2,2,4-trimethylpentyl) 2-methylpropanoate);

Ether-based solvents such as tetrahydrofuran and dioxane (including 1,4-dioxane and the like);

oxyethylene or oxypropylene (co)polymer-based solvents such as polyethylene glycol (for example, polyethylene glycol having a mass-average molecular weight of 200) and polypropylene glycol;

amide-based solvents such as formamide, acetamide, propanamide, butanamide, isobutyramide, pentanamide, N-methylformamide, N-methylacetamide, N-methylpropanamide, N-methylbutanamide, N-methylisobutyramide, N-methylpentanamide, N-ethylformamide, and N-ethylacetamide;

amide-based solvents such as 2-pyrrolidone, N-methylpyrrolidone, 3-methoxy-N,N-dimethylpropionamide, and 3-butoxy-N,N-dimethylpropionamide;

morpholine-based solvents such as N-methylmorpholine, N-ethylmorpholine, N-formylmorpholine, N-hydroxyethylmorpholine, 2-hydroxylethyl morpholine, and 4-acetylmorpholine;

urea-based solvents such as tetramethylurea and dimethylimidazolidinone;

carbonate-based solvents such as ethylene carbonate, 2,3-butylene carbonate, dimethyl carbonate, and propylene carbonate;

acetate-based solvents such as ethylene glycol monomethyl ether acetate, diethylene glycol monomethyl ether acetate, triethylene glycol monomethyl ether acetate, propylene glycol monomethyl ether acetate, dipropylene glycol monomethyl ether acetate, tripropylene glycol monomethyl ether acetate, ethylene glycol diacetate, diethylene glycol diacetate, propylene glycol diacetate, dipropylene glycol diacetate, and 3-methoxybutyl acetate; and

lactone-based solvents such as $\gamma$-butyrolactone, $\alpha$-methylene-$\gamma$-butyrolactone, $\varepsilon$-caprolactone, $\gamma$-valerolactone, $\gamma$-hexanolactone, $\gamma$-heptanolactone, $\delta$-valerolactone, $\delta$-hexanolactone, $\delta$-heptalactone, $\delta$-octalactone, $\delta$-nonalactone, $\delta$-decalactone, $\delta$-undecalactone, $\gamma,\gamma$-dimethyl-$\gamma$-butyrolactone, $\alpha$-methyl-$\gamma$-butyrolactone, $\gamma$-crotolactone, $\alpha$-methylene-$\gamma$-butyrolactone, $\beta$-methyl-$\gamma$-butyrolactone, and 6-methylvalerolactone. The water-soluble organic solvents may be used singly or in combination of two or more kinds thereof.

According to one embodiment, the water-soluble organic solvent preferably contains a solvent having a boiling point of 200°C or lower, from the viewpoints of moisturization, prevention of drying, and the like. According to one embodiment, the water-soluble organic solvent preferably contains a solvent having a boiling point of 250°C or higher in order to prevent complete drying in an inkjet head.

According to one embodiment, the water-soluble organic solvent preferably contains a glycol-based solvent, from the viewpoints of moisturization, prevention of drying, and the like. If the water-soluble organic solvent is a glycol-based solvent, the dispersibility of the colorant can be further improved, and an ink is obtained in which the colorant is stably and highly dispersed. Here, the term "glycol-based solvent" may mean a compound having two hydroxyl groups (glycol compound) or an ether compound in which a hydrogen atom of one or both of the hydroxyl groups is substituted with another group. The ether compound is preferably an aliphatic ether compound. An ether compound is preferable in which a hydrogen atom of one hydroxyl group included in a glycol compound is substituted with another group.

Examples of the glycol-based solvent include alkoxy alcohol-based solvents such as 3-methoxy-3-methyl-1-butanol, 1-methoxy-2-propanol (propylene glycol monomethyl ether), and 3-methoxy-n-butanol; diol-based solvents such as ethylene glycol, propylene glycol, diethylene glycol, dipropylene glycol, 1,3-propanediol, isobutylene glycol, triethylene glycol, tripropylene glycol, tetraethylene glycol, 1,2-propanediol, 1,3-propanediol, 2-methyl-1,2-propanediol, 2-methyl-1,2-propanediol, 1,2-butanediol, 1,3-butanediol, 1,4-butanediol, 1,2-pentanediol, 1,3-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; oxyethylene or oxypropylene (co)polymer-based solvents such as polyethylene glycol (for example, polyethylene glycol having a mass-average molecular weight of 200) and polypropylene glycol; monoalkyl ether-based solvents of polyhydric alcohols such as ethylene glycol monomethyl ether, diethylene glycol monomethyl ether, triethylene glycol monomethyl ether, propylene glycol monomethyl ether (3-methoxy-1-butanol), dipropylene glycol monomethyl ether, tripropylene glycol monomethyl ether, tetraethylene glycol monomethyl ether, ethylene glycol monoethyl ether, diethylene glycol monoethyl ether, triethylene glycol monoethyl ether, propylene glycol monoethyl ether, dipropylene glycol monoethyl ether, tripropylene glycol monoethyl ether, tetraethylene glycol monoethyl ether, ethylene glycol mono n-butyl ether, diethylene glycol mono n-butyl ether, triethylene glycol mono n-butyl ether, propylene glycol mono n-butyl ether, dipropylene glycol mono n-butyl ether, tripropylene glycol mono n-butyl ether, and tetraethylene glycol mono n-butyl ether; and dialkyl ether-based solvents of polyhydric alcohols such as diethylene glycol dimethyl ether, diethylene glycol diethyl ether, diethylene glycol ethyl methyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol dimethyl ether, propylene glycol diethyl ether, propylene glycol ethyl methyl ether, dipropylene glycol dimethyl ether, dipropylene glycol diethyl ether, dipropylene glycol ethyl methyl ether, tripropylene glycol dimethyl ether, tripropylene glycol diethyl ether, and tripropylene glycol ethyl methyl ether. Among these, ethylene glycol, propylene glycol, diethylene glycol, dipropylene glycol, isobutylene glycol, triethylene glycol, tripropylene glycol, tetraethylene glycol, and polyethylene glycol (for example, polyethylene glycol having a mass-average molecular weight of 200) are preferable.

According to one embodiment, the water-soluble organic solvent preferably contains a glycol-based solvent having an octanol/water partition coefficient of -1.80 or less. In this case, the stability of droplets ejected during inkjet printing is high, and the ejection stability (droplet formability and droplet recoverability) is more excellent. The octanol/-water partition coefficient is the ratio of the concentration of a substance in octanol to the concentration of the substance in water when the substance is dissolved in a mixture of octanol and water, and is represented by Kow or the common logarithm value Log Kow, and in the present specification, the common logarithm value Log Kow is used. The "1-octanol/water partition coefficient" (hereinafter, referred to as "partition coefficient") of the water-soluble organic solvent is measured with the method described in Examples. The glycol-based solvent more preferably has an octanol/water partition coefficient of -1.90 or less, still more preferably -1.95 or less, and particularly preferably -2.00 or less. The glycol-based solvent preferably has an octanol/water partition coefficient of -15.0 or more, more preferably -12.0 or more, still more preferably -10.0 or more, particularly preferably -8.00 or more, and most preferably -5.00 or more.

The partition coefficient and the boiling point of the water-soluble organic solvents are, for example, glycerin (partition coefficient: -1.76, boiling point: 290°C), propylene glycol (partition coefficient: -0.92, boiling point: 188°C), dipropylene glycol (partition coefficient: - 0.75, boiling point: 232°C), diethylene glycol (partition coefficient: -1.39, boiling point: 244°C), triethylene glycol (partition coefficient: -1.98, boiling point: 285°C), tetraethylene glycol (partition coefficient: -2.02, boiling point: 314°C), polyethylene glycol having a mass-average molecular weight of 200 (partition coefficient: -2.02, boiling point: > 200°C), polyethylene glycol having a mass-average molecular weight of 400 (partition coefficient: -3.67, boiling point: > 200°C), polyethylene glycol having a mass-average molecular weight of 1000 (partition coefficient: -7.13, boiling point: > 200°C), polyethylene glycol having a mass-average molecular weight of 2000 (partition coefficient: -13.33, boiling point: > 200°C), triethylene glycol monoethyl ether (partition coefficient: -2.79, boiling point: 255°C), ethylene glycol (partition coefficient: -1.36, boiling point: 197°C), and 1,2-hexanediol (partition coefficient: 0.58, boiling point: 170°C).

In the ink according to the present embodiment, two or more kinds of the water-soluble organic solvents are preferably used in combination. According to one embodiment, it is preferable to use a solvent having a boiling point of 200°C or lower and a solvent having a boiling point of 250°C or higher in combination in the ink according to the present embodiment. That is, according to one embodiment, in the ink according to the present embodiment, the water-soluble organic solvent contains a solvent having a boiling point of 200°C or lower and a solvent having a boiling point of 250°C or higher. The solvent having a boiling point of 200°C or lower is preferably a glycol-based solvent. Thus, the dispersibility of the colorant and the urethane resin particles can be further improved, and an ink is obtained in which the colorant and the urethane resin particles are stably and highly dispersed. For example, the excellent dispersibility in the ink further improves the droplet recoverability in the ejection stability. Thus, according to one embodiment, in the ink according to the present embodiment, the water-soluble organic solvent contains a solvent having a boiling point of 250°C or higher and a glycol-based solvent having a boiling point of 200°C or lower.

In the ink according to the present embodiment, three or more kinds of the water-soluble organic solvents are preferably used in combination. According to one embodiment, the ink according to the present embodiment contains a solvent having a boiling point of 200°C or lower, a solvent having a boiling point of 250°C or higher, and a glycol-based solvent having an octanol/water partition coefficient of more than -1.80. That is, the water-soluble organic solvent contains, for example, a solvent having a boiling point of 200°C or lower (preferably a glycol-based solvent having a boiling point of 200°C or lower), a solvent having a boiling point of 250°C or higher, and a glycol-based solvent having an octanol/water partition coefficient of - 1.80 or less. Thus, the dispersibility of the colorant and the urethane resin particles can be further improved, and an ink is obtained in which the colorant and the urethane resin particles are stably and highly dispersed. For example, the excellent dispersibility in the ink further improves the droplet formability in the ejection stability.

In the ink according to the present embodiment, two or more kinds of glycol-based solvents are preferably used in combination as the water-soluble organic solvent. According to one embodiment, the ink according to the present embodiment contains a solvent having a boiling point of 250°C or higher, a first glycol-based solvent having a boiling point of 200°C or lower, and a second glycol-based solvent having an octanol/water partition coefficient of -1.80 or less. That is, in the ink according to the present embodiment, the water-soluble organic solvent preferably contains a solvent having a boiling point of 250°C or higher, the first glycol-based solvent having a boiling point of 200°C or lower, and the second glycol-based solvent having an octanol/water partition coefficient of -1.80 or less. Thus, the dispersibility of the colorant and the urethane resin particles can be further improved, and an ink is obtained in which the colorant and the urethane resin particles are stably and highly dispersed. For example, the excellent dispersibility in the ink further improves the droplet formability and the droplet recoverability in the ejection stability.

The octanol/water partition coefficient of the first glycol-based solvent is not particularly limited, and is, for example, preferably more than -1.80, more preferably -1.5 or more, still more preferably -1.2 or more, and particularly preferably -1.0 or more. The second glycol-based solvent more preferably has an octanol/water partition coefficient of -1.90 or less, still more preferably -1.95 or less, and particularly preferably -2.00 or less. The boiling point of the second glycol-based solvent is not particularly limited, and, for example, the boiling point is preferably higher than 200°C.

As the solvent having a boiling point of 250°C or higher, for example, glycerin or the like is preferably used. As the first glycol-based solvent, for example, propylene glycol, ethylene glycol, or the like is preferably used, and as the second glycol-based solvent, for example, triethylene glycol, tetraethylene glycol, polyethylene glycol 200, or the like is preferably used. In a case where the water-soluble organic solvent contains a solvent having a boiling point of 250°C or higher (hereinafter, referred to as "solvent a1") and a glycol-based solvent (hereinafter, referred to as "solvent a2"), the content ratio of the solvent a1 to the solvent a2 (solvent a1 : solvent a2) (mass ratio) is preferably 1 : 99 to 95 : 5, more preferably 5 : 95 to 90 : 10, still more preferably 10 : 80 to 80 : 20, particularly preferably 20 : 80 to 70 : 30, and most preferably 30 : 70 to 60 : 40. If the content ratio of the solvent a1 to the solvent a2 is within the above range, a recording method can be provided in which a textile printed product excellent in rubbing fastness can be obtained, clogging of a nozzle due to drying or thickening of an ink is prevented, and the discharge stability is excellent in a wide temperature range.

In a case where the water-soluble organic solvent contains two kinds of glycol-based solvents that are the first glycol-based solvent having a boiling point of 200°C or lower (hereinafter, referred to as "solvent b1") and the second glycol-based solvent having an octanol/water partition coefficient of -1.80 or less (hereinafter, referred to as "solvent b2"), the content ratio of the solvent b1 to the solvent b2 (solvent b1 : solvent b2) (mass ratio) is preferably 1 : 99 to 95 : 5, more preferably 5 : 95 to 90 : 10, still more preferably 10 : 80 to 80 : 20, particularly preferably 20 : 80 to 60 : 40, and most preferably 25 : 75 to 50 : 50. If the content ratio of the solvent b1 to the solvent b2 is within the above range, a recording method can be provided in which a textile printed product excellent in rubbing fastness can be obtained, clogging of a nozzle due to drying or thickening of an ink is prevented, and the discharge stability is excellent in a wide temperature range.

According to one embodiment, the organic solvent is one or more selected from the group consisting of glycerin, propylene glycol, ethylene glycol, 1,2-hexanediol, dipropylene glycol, diethylene glycol, triethylene glycol, tetraethylene glycol, polyethylene glycol, and triethylene glycol monoethyl ether.

The content of the organic solvent is, for example, preferably 10 mass% or more and 50 mass% or less, more preferably 15 mass% or more and 45 mass% or less, still more preferably 18 mass% or more and 42 mass% or less, particularly preferably 20 mass% or more and 40 mass% or less, and most preferably 22 mass% or more and 35 mass% or less, with respect to the total mass (100 mass%) of the ink. If the content of the organic solvent is within the above range, the dispersibility of the colorant can be further improved, and an ink is obtained in which the colorant is stably and highly dispersed. In a case where two or more kinds of organic solvents are contained, the content of the organic solvent is the total amount thereof.

The content of the organic solvent is such that the mass ratio of the organic solvent to the colorant (mass of organic solvent/mass of colorant) is preferably 0.1 to 20.0, more preferably 0.5 to 15.0, still more preferably 1.0 to 12.0, particularly preferably 1.5 to 10.0, and most preferably 2.0 to 9.5. According to one embodiment, the mass ratio of the organic solvent to the colorant (mass of organic solvent/mass of colorant) may be 3.0 to 10.0, 4.0 to 10.0, 5.0 to 10.0, or 5.5 to 9.0.

[Water]

The ink according to the present embodiment may contain water. As the water, ion-exchanged water, distilled water, purified water, or the like is preferably used.

The content of the water is such that the mass ratio of the water to the organic solvent (mass of water/mass of organic solvent) is preferably 0.1 to 20.0, more preferably 0.2 to 15.0, still more preferably 0.3 to 10.0, particularly preferably 0.5 to 8.0, and most preferably 1.2 to 7.0. According to one embodiment, the mass ratio of the organic solvent to the colorant (mass of organic solvent/mass of colorant) may be 1.0 to 6.0, 1.0 to 5.0, 1.0 to 4.0, 1.5 to 5.0, 2.0 to 5.0, or 2.0 to 4.0.

The content of the water is, for example, preferably 20 mass% or more and 90 mass% or less, more preferably 25 mass% or more and 88 mass% or less, still more preferably 30 mass% or more and 85 mass% or less, particularly preferably 40 mass% or more and 82 mass% or less, and most preferably 50 mass% or more and 80 mass% or less, with respect to the total mass (100 mass%) of the ink.

[Colorant]

The ink according to the present embodiment may include a colorant. As the colorant, a pigment or a dye is used. In the ink according to the present embodiment, the colorant is preferably a pigment because a pigment has good dispersibility in the constituent components of the ink and is excellent in weather resistance. The colorant may be a solid colorant.

The pigment included in the ink according to the present embodiment is not particularly limited, and is preferably, for example, an organic pigment or an inorganic pigment of any of the following numbers described in the Color Index.

Examples of orange pigments include Pigment Orange 31 and 43.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, 34, 36, and 43. As the red or magenta pigment, a mixed crystal may be used.

Examples of blue or cyan pigments include Pigment Blue 1, 15, 15:1, 15:2, 15:3, 15:4, 15:6, 16, 17-1, 22, 27, 28, 29, 36, and 60.

Examples of green pigments or yellow pigments include Pigment Green 7, 26, 36, and 50. Examples of yellow pigments include Pigment Yellow 1, 3, 12, 13, 14, 15, 17, 34, 35, 37, 55, 74, 81, 83, 93, 94, 95, 97, 108, 109, 110, 128, 137, 138, 139, 151, 153, 154, 155, 157, 166, 167, 168, 180, 185, 193, and 213.

Examples of black pigments include Pigment Black 7, 28, and 26.

Examples of a commercially available product of the pigment include Chromofine Yellow 2080, 5900, 5930, AF-1300, 2700 L, Chromofine Orange 3700 L, 6730, Chromofine Scarlet 6750, Chromofine Magenta 6880, 6886, 6891 N, 6790, 6887, Chromofine Violet RE, Chromofine Red 6820, 6830, Chromofine Blue HS-3, 5187, 5108, 5197, 5085 N, SR-5020, 5026, 5050, 4920, 4927, 4937, 4824, 4933GN-EP, 4940, 4973, 5205, 5208, 5214, 5221, 5000P, Chromofine Green 2GN, 2GO, 2G-550D, 5310, 5370, 6830, Chromofine Black A-1103, Seika Fast Yellow 10GH, A-3, 2035, 2054, 2200, 2270, 2300, 2400(B), 2500, 2600, ZAY-260, 2700(B), 2770, Seika Fast Red 8040, C405(F), CA120, LR-116, 1531B, 8060R, 1547, ZAW-262, 1537B, GY, 4R-4016, 3820, 3891, ZA-215, Seika Fast Carmine 6B1476T-7, 1483LT, 3840, 3870, Seika Fast Bordeaux 10B-430, Seika Light Rose R40, Seika Light Violet B800, 7805, Seika Fast Maroon 460N, Seika Fast Orange 900, 2900, Seika Light Blue C718, A612, Cyanine Blue 4933M, 4933GN-EP, 4940, 4973 (manufactured by Dainichiseika Color & Chemicals Mfg. Co., Ltd.); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103, 104, 105, 106, 111, 118, 124, KET Green 201, FASTOGEN SUPER MAGENTA RY (manufactured by Dic Corp.); Colortex Yellow 301, 314, 315, 316, P-624, 314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, U905 (manufactured by SANYO COLOR WORKS, Ltd.); Lionol Yellow 1405G, Lionol Blue FG7330, FG7350, FG7400G, FG7405G, ES, ESP-S (manufactured by Toyo Ink Co., Ltd.), Toner Magenta E02, Permanent Rubin F6B, Toner Yellow HG, Permanent Yellow GG-02, Hostapeam Blue B2G (manufactured by Hoechst Industry Limited); Novoperm P-HG, Hostaperm Pink E, Hostaperm Blue B2G (manufactured by Clariant); carbon blacks #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

The pigment is preferably further dispersed with a pigment dispersant from the viewpoint of enhancing the dispersibility in the ink. The pigment dispersant will be described below.

The pigment may be a self-dispersible pigment. The self-dispersible pigment is obtained by modifying the surface of a pigment particle with a group having a hydrophilic moiety, and includes a pigment particle and a hydrophilic group bonded to the surface of the pigment particle. Examples of the hydrophilic group include a carboxy group, a sulfonic acid group, and a phosphorus-containing group. Examples of the phosphorus-containing group include a phosphoric acid group, a phosphonic acid group, a phosphinic acid group, a phosphite group, and a phosphate group.

Examples of a commercially available product of the self-dispersible pigment include

Cab-0-Jet (registered trademark) 200K, 250C, 260M, 270V (sulfonic acid group-containing self-dispersible pigments),
Cab-0-Jet (registered trademark) 300K (carboxylic acid group-containing self-dispersible pigment), and
Cab-0-Jet (registered trademark) 400K, 450C, 465M, 470V, and 480V (phosphoric acid group-containing self-dispersible pigments) manufactured by Cabot Corporation.

The dye is preferably a solid dye, and may be, for example, a disperse dye.

Examples of the disperse dye include C.I.Disperse Yellow: 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232; C.I.Disperse Orange: 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, 142; C.I.Disperse Red: 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328, 337, 343; C.I.Disperse Violet: 1, 4, 8, 23, 26, 27, 28, 31, 33, 35, 36, 38, 40, 43, 46, 48, 50, 51, 52, 56, 57, 59, 61, 63, 69, 77; C.I.Disperse Green9; C.I.Disperse Brown: 1, 2, 4, 9, 13, 19; C.I.Disperse Blue: 3, 7, 9, 14, 16, 19, 20, 26, 27, 35, 43, 44, 54, 55, 56, 58, 60, 62, 64, 71, 72, 73, 75, 77, 79, 79:1, 79:2, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 281, 284, 285, 287, 288, 291, 291:1, 293, 295, 297, 301, 315, 330, 333, 373; C.I.Disperse Black 1, 3, 10, and 24.

The content of the colorant is not particularly limited, and is preferably 0.3 mass% to 12.0 mass% with respect to the total mass of the ink from the viewpoint of easy adjustment of the viscosity of the ink to a range described below and formation of an image having a higher density. If the content of the colorant is 0.3 mass% or more with respect to the total mass of the ink, the color of an image to be obtained is likely to be clear, and if the content is 12.0 mass% or less, the viscosity of the ink is not too high, and thus the discharge stability is less likely to be impaired. From the similar viewpoint, the content of the colorant is more preferably 0.5 mass% to 8.0 mass% with respect to the total mass of the ink.

The content of the colorant is such that the mass ratio of the colorant to the urethane resin (mass of colorant/mass of urethane resin) is preferably 0.05 to 2.0, more preferably 0.06 to 1.5, still more preferably 0.08 to 1.2, particularly preferably 0.1 to 1.0, and most preferably 0.1 to 0.8. According to one embodiment, the mass ratio of the colorant to the urethane resin (mass of colorant/mass of urethane resin) may be 0.06 to 1.0, or may be 0.06 to 0.6. If the mass ratio of the colorant to the urethane resin is within the above range, the dispersibility of the colorant can be further improved, and an ink is obtained in which the colorant is stably and highly dispersed.

In the case of using the pigment as the colorant, the mass ratio of the pigment to the urethane resin (mass of pigment/mass of urethane resin) similar to the mass ratio described above can be preferably applied. That is, the mass ratio of the pigment to the urethane resin (mass of pigment/mass of urethane resin) is preferably 0.05 to 2.0, more preferably 0.06 to 1.5, still more preferably 0.08 to 1.2, particularly preferably 0.1 to 1.0, and most preferably 0.1 to 0.8. According to one embodiment, the mass ratio of the pigment to the urethane resin (mass of pigment/mass of urethane resin) may be 0.06 to 1.0, or may be 0.06 to 0.6. If the mass ratio of the pigment to the urethane resin is within the above range, the dispersibility of the pigment can be further improved, and an ink is obtained in which the pigment is stably and highly dispersed.

[Pigment Dispersant]

The ink according to the present embodiment may include a pigment dispersant in the case of using the pigment as the colorant. The pigment dispersant is present in the ink as to surround the surfaces of pigment particles or is adsorbed onto the surfaces of pigment particles to form a pigment dispersion liquid and thus satisfactorily disperse the pigment. The pigment dispersant included in the ink according to the present embodiment is preferably a polymer dispersant, and more preferably an anionic polymer dispersant.

The anionic polymer dispersant is a polymer dispersant having a hydrophilic group such as a carboxylic acid group, a phosphorus-containing group, or a sulfonic acid group, and is preferably a polymer dispersant having a carboxylic acid group.

The polymer dispersant having a carboxylic acid group may be a polycarboxylic acid or its salt. Examples of the polycarboxylic acid include (co)polymers of monomers selected from acrylic acid and its derivatives, maleic acid and its derivatives, itaconic acid and its derivatives, and fumaric acid and its derivatives, and salts thereof. Examples of another monomer included in the copolymer include styrene and vinylnaphthalene.

The anionic polymer dispersant preferably has an anionic group equivalent of, for example, 1.1 to 3.8 meq/g from the viewpoint of sufficiently dispersing the pigment particles. If the anionic group equivalent is within the above range, high pigment dispersibility is easily obtained without increasing the molecular weight of the anionic polymer dispersant. The anionic group equivalent of the anionic polymer dispersant can be determined from the acid value. The acid value can be measured in accordance with JIS K0070.

The weight average molecular weight (Mw) of the polymer dispersant is not particularly limited, and is preferably 5000 to 30000. If the Mw of the polymer dispersant is 5000 or more, the pigment particles are easily sufficiently dispersed, and if the Mw is 30000 or less, the ink is not excessively thickened, and thus the penetrability into a textile is less likely to be impaired. The Mw of the polymer dispersant can be measured with a method similar to the above-described method.

The content of the polymer dispersant is not particularly limited as long as the polymer dispersant sufficiently disperses the pigment particles and has a viscosity to an extent such that the penetrability into a textile is not impaired, and the content is preferably 20 to 100 mass%, and more preferably 25 to 60 mass% with respect to the pigment. These pigment dispersants may be used singly or in combination of two or more kinds thereof.

[Another Component]

The ink according to the present embodiment may further include another component other than the above-described components, as necessary. Examples of another component include additives such as a neutralizer. The ink according to the present embodiment preferably does not include a polyhydric alcohol that is solid at ordinary temperature and betaine. This is because a polyhydric alcohol that is solid at ordinary temperature and betaine remain on the textile after drying.

(Additive)

Examples of the additives include a neutralizer, a surfactant, an antiseptic, a fungicide, and a pH adjuster.

In the ink according to the present embodiment, when the urethane resin has an anionic group such as a carboxy group and a sulfonic acid group, the ink may further include a neutralizer. As the neutralizer, a known basic compound can be used, and for example, sodium hydroxide, potassium hydroxide, ammonia, triethylamine, or the like can be used. In the case of using the pigment as the colorant in the ink according to the present embodiment, if the pigment dispersion liquid contains a neutralizer, dissociation of the anionic group in the pigment dispersion liquid is moderately promoted, and the dispersibility can be further enhanced.

The content of the neutralizer is not particularly limited, and the neutralizer is preferably contained in an amount such that the neutralization rate is 30% or more and 100% or less. The neutralization rate can be determined with Formula (A) described below.

Neutralization rate (%) = (mass of basic compound [g]/(equivalent of basic compound [g/mol] × valence number of basic compound)) ÷ ((acid value of pigment dispersant [mgKOH/g] × mass of pigment dispersant [g])/(56 [g/mol] × 1000))    Formula (A)

The surfactant can reduce the surface tension of the ink and enhance the wettability of the ink to a textile. The kind of the surfactant is not particularly limited, and may be, for example, an acetylene glycol-based surfactant, a silicone-based surfactant, or a fluorine-based surfactant. Examples of a commercially available product of the surfactant include OLFINE E1010 (manufactured by Nissin Chemical Industry Co., Ltd.).

Examples of the antiseptic or the fungicide include aromatic halogen compounds (for example, Preventol CMK), methylene dithiocyanate, halogen-containing nitrogen-sulfur compounds, and 1,2-benzisothiazolin-3-one (for example, PROXEL GXL).

Examples of the pH adjustor include citric acid, sodium citrate, potassium citrate, hydrochloric acid, sodium hydroxide, potassium hydroxide, sodium carbonate, potassium carbonate, sodium bicarbonate, potassium bicarbonate, and organic amines.

<<Method of Producing Inkjet Ink>>

The inkjet ink of the present embodiment can be produced with any method. The urethane resin included in the inkjet ink of the present embodiment is preferably produced by solution polymerization using an organic solvent (preferably a water-soluble organic solvent), and is more preferably produced by solution polymerization (emulsion polymerization) using water as described above in the method of producing an aqueous urethane resin dispersion containing a urethane resin and water. Using such an organic solvent (preferably a water-soluble organic solvent, and more preferably water) as the solvent can simplify the process because the polymer solution obtained by polymerization (that is, a urethane resin dispersion, and preferably an aqueous urethane resin dispersion) can be used as it is for preparation of a colorant dispersion liquid (for example, a pigment dispersion liquid). For example, the inkjet ink of the present embodiment can be produced through (i) a step of mixing a colorant, a colorant dispersant (for example, a pigment dispersion liquid), and a solvent (water or the like) to obtain a colorant dispersion liquid and (ii) a step of mixing the obtained colorant dispersion liquid, the aqueous urethane resin dispersion according to the present embodiment, an organic solvent, and, as necessary, water.

<<Inkjet Textile Printing Method>>

According to the present invention, an inkjet textile printing method is also provided in which the inkjet ink according to the present embodiment is attached to a textile to perform recording. That is, according to the present invention, an image forming method is also provided that includes a step of applying droplets of the inkjet ink according to the present embodiment onto a textile with an inkjet method. Hereinafter, the inkjet textile printing method (image forming method) is referred to as the textile printing method according to the present embodiment.

The textile printing method according to the present embodiment specifically includes (1) a step of discharging an inkjet ink from an inkjet recording head to apply droplets of the inkjet ink onto a textile (ink applying step) and (2) a step of drying and fixing the inkjet ink applied onto the textile (drying and fixing step).

The textile printing method according to the present embodiment may further include (3) a step of pretreating the textile (pretreatment step) and (4) a step of applying a posttreatment liquid (posttreatment step), as necessary.

Ink Applying Step (Step (1))

This is a step of discharging an inkjet ink from an inkjet recording head to apply droplets of the inkjet ink onto a textile.

The kind of the fiber material included in the textile is not particularly limited, and examples of the fiber material include natural fibers such as cotton (cellulose fibers), hemp, wool, and silk; synthetic fibers such as rayon, vinylon, nylon, acrylic, polyurethane, polypropylene, polyester, acetate, triacetate, polyamide, and polyurethane; and biodegradable fibers such as polylactic acid. The fiber material may be blended fibers thereof. The textile may be obtained by forming the above-described fibers into any form such as a form of a woven fabric, a knitted fabric, or a nonwoven fabric. Among these, a textile formed of fibers including cellulose, such as cotton or hemp, is more preferable as the textile used in the textile printing method according to the present embodiment. By using such a textile, more excellent fixability of the colorant can be obtained.

In the textile printing method according to the present embodiment, the textile preferably has a cationic group or an acid group at least on the surface from the viewpoint of enhancing the adsorption rate or the fixability of the colorant. The textile having a cationic group or an acid group at least on the surface may be pretreated or may be not pretreated. For example, the textile having a cationic group or an acid group at least on the surface is obtained through (3) the step of pretreating the textile (pretreatment step).

Drying and Fixing Step (Step (2))

In the drying step, the inkjet ink applied onto the textile is dried to remove the solvent component in the inkjet ink. Thus, the colorant is fixed to the textile.

The drying method is not particularly limited, and may be a method using a heater, a hot air dryer, a heating roller, or the like. Among them, a hot air dryer and a heater are preferably used to heat and dry both sides of the textile.

The drying temperature is to be set so as to evaporate the solvent component in the inkjet ink. Specifically, the drying temperature is preferably equal to or higher than the temperature at which the solvent component evaporates and equal to or lower than $(Tg + 170)°C$ ($Tg$ means the $Tg$ of the urethane resin particles). The drying temperature may be room temperature.

In the textile printing method according to the present embodiment, the resin particles applied to the textile has low $Tg$, and therefore even if the resin particles are fused to each other during drying of the inkjet ink, a hard film is less likely to be formed. Thus, the texture of the textile is less likely to be impaired.

Pretreatment Step (Step (3))

The textile printing method according to the present embodiment may further include (3) the step of pretreating the textile (pretreatment step), as necessary. In the pretreatment step, a pretreatment liquid is applied to the textile. The kind of the pretreatment liquid is not particularly limited, and can be selected according to the composition of the inkjet ink. For example, the pretreatment liquid for the inkjet ink preferably contains a compound having an acid group or a cationic group. The compound having an acid group or a cationic group contained in the pretreatment liquid aggregates the urethane resin included in the inkjet ink and the anionic component contained in the second treatment liquid. The aggregation is preferably performed by utilizing an electrical action.

Examples of the cationic group in the compound having an acid group or a cationic group include a secondary amino group, a tertiary amino group, and a quaternary ammonium salt group. Examples of the compound having an acid group or a cationic group include cationic resins and cationic surfactants, and a cationic resin is preferable.

Examples of the cationic resin include a cationic urethane resin, a cationic olefin resin, and a cationic alkylamine resin. Examples of the commercially available product include MPT-60 (manufactured by MITSUBISHI PENCIL COMPANY, LIMITED), UNISENCE KHE100L (manufactured by SENKA corporation), and MZ477 (manufactured by TAKAMATSU OIL & FAT CO., LTD., urethane resin). Among them, a cationic alkylamine resin MPT-60 and UNISENCE KHE100L (manufactured by SENKA corporation) are preferable from the viewpoint of an easier interaction or reaction with a block copolymer described above.

The method of applying the pretreatment liquid is not particularly limited, and may be, for example, a pad method, a coating method, a spraying method, an inkjet method, or the like. The pretreatment liquid applied to the textile can also be heated and dried using hot air, a hot plate, or a heat roller.

Posttreatment Step (Step (4))

The textile printing method according to the present embodiment may further include (4) the step of applying a posttreatment liquid (posttreatment step), as necessary. In the posttreatment step, a posttreatment liquid is applied onto the inkjet ink applied to the textile. The second treatment liquid preferably contains an anionic component. As the anionic component, a component can be used that is similar to the anionic resin dispersion (that is, the aqueous urethane resin dispersion) included in the inkjet ink. Preferred ranges of the acid value, the Tg, and the average particle size of the aqueous urethane resin dispersion contained in the second treatment liquid are also similar to those of the aqueous urethane resin dispersion included in the inkjet ink.

The posttreatment liquid can be applied with a method similar to the method of applying the pretreatment liquid. Among them, a spraying method and an inkjet method are preferable.

As described above, according to the present invention, a method of producing an inkjet textile printed product is also provided. The method includes the steps of applying a pretreatment liquid to an area to be printed with an inkjet ink in a textile; printing the area to be printed with an inkjet ink in the textile with an inkjet ink including a urethane resin and an organic solvent; and heating the textile to which the pretreatment liquid is applied, the textile that is printed with the inkjet ink, and the urethane resin includes a constituent unit derived from (A) polyisocyanate, a constituent unit derived from (B) polyol, and a constituent unit derived from(C) polyamine, and (B) the polyol includes (B1) polyether polyol and (B2) diol compound having a carboxy group and/or a carboxylate group, (C) the polyamine includes (C1) first polyamine having two groups selected from an amino group, an imino group, and a hydrazide group and (C2) second polyamine having three or four groups selected from an amino group, an imino group, and a hydrazide group.

[Inkjet Ink Set]

The inkjet ink used in the textile printing method according to the present embodiment is preferably used together with the pretreatment liquid. Thus, according to one embodiment, the present invention also provides an inkjet ink set including the inkjet ink and the pretreatment liquid.

The inkjet ink set includes the pretreatment liquid and the inkjet ink, and may further include the posttreatment liquid. The inkjet ink set preferably includes the posttreatment liquid. If the inkjet ink set includes the posttreatment liquid, the rubbing fastness is more easily enhanced.

<<Textile Printed Product>>

A textile printed product (image-formed product) to be obtained includes a textile and an image layer disposed on the textile.

The image layer includes a component derived from the inkjet ink, and may further include a component derived from another liquid such as the posttreatment liquid as necessary. For example, the image layer includes an ink layer, and may further include another layer such as a posttreatment layer as necessary.

Thus, the image layer includes a urethane resin derived from the inkjet ink. Therefore, the resulting textile printed product (image-formed product) has good rubbing fastness while maintaining good texture.

<<Rubbing Fastness>>

The dry rubbing fastness can be measured with the following procedure. The obtained image-formed product is subjected to a dry rubbing fastness test using a type I tester in accordance with JIS L0849:2013, and evaluated using the gray scale for assessing staining. Specifically, on the textile printed product (textile for evaluation), the portion having a length of 100 mm where the image is formed is rubbed back and forth 10 times with a cotton cloth under a load of about 9 N. The wet state of the cotton cloth is set to a wet state of about 100% with the method described in JIS. After rubbing the textile printed product (textile for evaluation), the density of the color attached to the cotton cloth is determined by the grade corresponding to the same density of the gray scale for assessing staining.

<<Texture>>

The texture can be measured with the following procedure. The bending stress B-MEAN [gf $\times$ cm$^2$/cm] is measured using a KES-FB2-A pure bending tester (manufactured by KATO TECH CO., LTD.), and the difference $\Delta B$ from an untreated textile is calculated. The width of the textile is set to 20 cm. In evaluation of the texture, the texture is preferable if the $\Delta B$ is 0.12 or less, more preferable if the $\Delta B$ is 0.09 or less, and still more preferable if the $\Delta B$ is 0.06 or less.

<<Droplet Formability>>

The droplet formability can be measured with the following procedure. In an environment of an environmental temperature and humidity of 20°C and 40 %RH, the ink is introduced into a KM1024i head, and then the droplet formability (stability of droplet formation) is evaluated by continuous discharge evaluation. The droplet formability is preferably such that a slight satellite and slight main droplet deflection occur (the droplet formability is acceptable), more preferably such that a slight satellite occurs (the droplet formability is good), and still more preferably no satellite occurs (the droplet formability is excellent).

<<Droplet Recoverability>>

The droplet recoverability can be measured with the following procedure. In a standard environment of an environmental temperature and humidity of 20°C and 40 %RH, the ink is introduced into a KM1024i head, and then the droplet recoverability is evaluated by the discharge recoverability after leaving the ink in a state of being not moisturized for 10 minutes. The droplet recoverability is preferably such that all of the nozzles are recovered by simple maintenance (the droplet recoverability is acceptable), more preferably such that all of the nozzles are recovered by a discharge operation (the droplet recoverability is good), and still more preferably such that all of the nozzles are recovered by a short discharge operation (the droplet recoverability is excellent).

<<Ink Storage Stability>>

The inkjet ink according to the present embodiment has excellent ink storage stability. The ink storage stability can be measured with the following procedure. The viscosity of the ink after storage at 50°C for 14 days is measured with an E-type viscometer, and the difference in viscosity from the ink stored at room temperature (25°C) for 14 days is calculated. The ink storage stability is preferably such that the ink viscosity variation is $\pm 0.3$ mPa·s or more and less than $\pm 0.5$ mPa·s (the ink storage stability is acceptable), more preferably such that the ink viscosity variation is $\pm 0.2$ mPa·s or more and less than $\pm 0.3$ mPa·s (the ink storage stability is good), still more preferably such that the ink viscosity variation is $\pm 0.1$ mPa·s or more and less than $\pm 0.2$ mPa·s, and particularly preferably such that the ink viscosity variation is less than $\pm 0.1$ mPa·s (the ink storage stability is remarkably excellent).

Examples

The present invention will be described in more detail with reference to Examples and Comparative Examples described below. However, the technical scope of the present invention is not limited to Examples described below. Note that unless otherwise specified, "%" and "part(s)" mean "mass%" and "part(s) by mass", respectively. In Examples described below, unless otherwise specified, an operation was performed under conditions of room temperature (20°C or higher and 25°C or lower) and a relative humidity of 30 %RH or more and 50 %RH or less.

<<Production of Binder Resin Dispersion Liquid>>

(1) Production of aqueous urethane resin dispersion 1 (combination use of bifunctional and trifunctional chain extenders) In a four-necked flask equipped with a stirrer, a reflux condenser tube, a thermometer, and a nitrogen-blowing tube, 205.6 parts by mass (40.0 mol) of polytetramethylene glycol (number-average molecular weight 2,000), 14.9 parts by mass (43.3 mol) of dimethylolpropionic acid, and 123.4 parts by mass of methyl ethyl ketone as a solvent were weighed out and mixed uniformly, and then 67.3 parts by mass (100.0 mol) of dicyclohexylmethane diisocyanate was added and reacted at $85 \pm 5$ °C for 300 minutes to obtain a methyl ethyl ketone solution of terminal isocyanate group-containing urethane prepolymer (hereinafter, referred to as urethane prepolymer solution) having an isocyanate group content of 1.30 mass%.

Then, the urethane prepolymer solution was cooled, and 9.9 parts by mass (43.3 mol) of dimethylaminoethanol was added at 40°C to perform a neutralization reaction. Next, 708.8 parts by mass of water was gradually added to the urethane prepolymer solution while the solution was stirred to emulsify and disperse the terminal isocyanate group-containing urethane prepolymer. To the resulting emulsified dispersion liquid, 1.6 parts by mass (12.4 mol) of hydrazine monohydrate and 0.6 parts by mass (2.3 mol) of diethylenetriamine were added, the mixture was stirred at $40 \pm 5$ °C for 90 minutes, and then desolvation (removal of methyl ethyl ketone) was performed at 40°C under reduced pressure to obtain an aqueous urethane resin dispersion 1 having a urethane resin solid content (non-volatile content) of 30.0 mass%. In the elongation reaction, the value of second polyamine/(first polyamine + second polyamine) (mol%) was 15.7 (i.e., mol%: C2/(C1 + C2) = 15.7), and the value of second polyamine/(first polyamine + second polyamine) (mass%) was 27.7 (i.e., mass%: C2/(C1 + C2) = 27.7). The obtained urethane resin had an acid value of 21.5 mgKOH/g and a glass transition temperature within a range of -65 to -75°C. The volume-average particle size (d50) of the resin particles in the aqueous urethane resin dispersion 1 was in the range of 30 to 50 nm. The glass transition temperature of the urethane resin in the aqueous urethane resin dispersion 1 and the volume-average particle size (d50) of the resin particles in the aqueous urethane resin dispersion 1 were calculated with the methods described below.

(2) Production of aqueous urethane resin dispersion 2 (combination use of bifunctional and tetrafunctional chain extenders)

An aqueous urethane resin dispersion 2 was produced in the same manner as in production of the aqueous urethane resin dispersion 1 described above except that 0.6 parts by mass (1.7 mol) of triethylenetetramine was used instead of 0.6 parts by mass (2.3 mol) of diethylenetriamine in production of the aqueous urethane resin dispersion 1. In the obtained aqueous urethane resin dispersion 2, the urethane resin had an acid value of 21.5 mgKOH/g and a glass transition temperature within a range of -65 to -75°C. In the aqueous urethane resin dispersion 2, the resin particles had a volume-average particle size (d50) within a range of 30 to 50 nm.

(3) Production of aqueous urethane resin dispersion 3 (use of only bifunctional chain extender)

An aqueous urethane resin dispersion 3 was produced in the same manner as in production of the aqueous urethane resin dispersion 1 described above except that 0.4 parts by mass (3.4 mol) of hydrazine monohydrate (2.0 parts by mass (15.8 mol) of the total amount of hydrazine monohydrate) was used instead of 0.6 parts by mass (2.3 mol) of diethylenetriamine in production of the aqueous urethane resin dispersion 1. In the obtained aqueous urethane resin dispersion 3, the urethane resin had an acid value of 21.5 mgKOH/g and a glass transition temperature within a range of -65 to -75°C. In the aqueous urethane resin dispersion 3, the resin particles had a volume-average particle size (d50) within a range of 30 to 50 nm.

(4) Production of aqueous urethane resin dispersion 4 (use of only tetrafunctional chain extender)

An aqueous urethane resin dispersion 4 was produced in the same manner as in production of the aqueous urethane resin dispersion 1 described above except that 3.0 parts by mass (11.5 mol) of triethylenetetramine was used instead of 1.6 parts by mass (12.4 mol) of hydrazine monohydrate and 0.6 parts by mass (2.3 mol) of diethylenetriamine in production of the aqueous urethane resin dispersion 1. In the obtained aqueous urethane resin dispersion 4, the urethane resin had an acid value of 21.5 mgKOH/g and a glass transition temperature within a range of -65 to -75°C. In the aqueous urethane resin dispersion 4, the resin particles had a volume-average particle size (d50) within a range of 30 to 50 nm.

<Measurement of Glass Transition Temperature>

The aqueous urethane resin dispersion was applied to a release film so that the resin had a dry film thickness of 400 $\mu$m, and the resulting product was left at a room temperature of 20°C at a humidity of 65 %RH for 48 hours, and then heat-treated in a dryer at 120°C for 45 minutes to prepare a polyurethane resin film. The urethane resin film was peeled from the release film and cut into a strip shape having a size suitable for dynamic viscoelasticity measurement to obtain a urethane resin sample. The dynamic viscoelasticity of the urethane resin sample was measured using a dynamic viscoelasticity measuring apparatus (manufactured by Hitachi High-Tech Corp., trade name "DMA7100") under the conditions of a tension mode, a frequency of 10 Hz, a temperature of -120 to 180°C, and a temperature rise rate of 5 °C/min. A graph was prepared that showed the temperature dependence (with a horizontal axis representing the temperature) of the storage modulus (E'), the loss modulus (E"), and the loss tangent (tan $\delta$) obtained by the measurement. Then, the temperature at which the temperature dependence of tan $\delta$ showed a peak was regarded as the glass transition temperature (°C).

<Volume-Average Particle Size (d50)>

The aqueous urethane resin dispersion was diluted 60 times with ion-exchanged water, and the diluted liquid was measured using a dynamic light scattering particle size distribution analyzer ("Zetasizer Nano ZS" manufactured by Malvern Panalytical Ltd.) to determine the volume-average particle size d50 of the resin particles in the aqueous urethane resin dispersion.

<<Production of Pigment Dispersion Liquid>>

Into 7 parts by mass of a styrene-butyl acrylate-methacrylate copolymer (anionic polymer dispersant, weight-average molecular weight: 16000, anionic group equivalent: 3.5 meq/g) as a pigment dispersant, 63 parts by mass of water was mixed, then the mixture was heated and stirred, and sodium hydroxide corresponding to a neutralization degree of 50 mass% was added to prepare a neutralized product of the pigment dispersant. Into this mixed liquid, 30 parts by mass of Pigment Red 122 was added and preliminarily mixed, and then dispersed using a sand grinder containing 0.5 mm zirconia beads at a volume fraction of 50 vol% to obtain a magenta pigment dispersion liquid having a pigment concentration of 30 mass%.

<<Production of Pretreatment Liquid>>

A pretreatment liquid for an inkjet was obtained by mixing 20 mass% of propylene glycol and 10 mass% of glycerin as moisturizing solvents, 0.1 mass% of SURFYNOL E1010 as a surfactant, 0.1 mass% of Proxel GXL(S) as an antiseptic, 2 mass% of a quaternary salt of an alkylamine-epichlorohydrin adduct as a compound having an acid group or a cationic group, and the balance being ion-exchanged water.

<<Production of Posttreatment Liquid>>

A posttreatment liquid for an inkjet was obtained by mixing 20 mass% of propylene glycol and 10 mass% of glycerin as moisturizing solvents, 0.1 mass% of SURFYNOL E1010 as a surfactant, 0.1 mass% of Proxel GXL(S) as an antiseptic, 33.3 mass% of an aqueous urethane resin dispersion as an anionic resin dispersion, and the balance being ion-exchanged water.

<<Production of Inkjet Ink>>

Inkjet inks of Examples 1 to 13 and Comparative Examples 1 to 4 (inks 1 to 13 and C1 to C4) were prepared with the formulations listed in the following Tables 1 and 2. Specifically, organic solvents, an activator (OLFINE E1010), and an antiseptic (Proxel GXL(S)) were added to ion-exchanged water in this order in amounts so as to obtain a composition ratio listed in Tables 1 and 2, and the resulting mixture was stirred at room temperature for 15 minutes or more to obtain a solvent mixed liquid. Next, in another container, the solvent mixed liquid was slowly added while an aqueous urethane resin dispersion was stirred that had an amount so as to obtain a composition ratio listed in Tables 1 and 2, and then the resulting mixture was stirred for 20 minutes or more to obtain a urethane resin mixed liquid. Next, in another container, the urethane resin mixed liquid was slowly added while a colorant dispersion liquid was stirred that had an amount so as to obtain a composition ratio listed in Tables 1 and 2, and the resulting mixture was stirred for 20 minutes or more and then filtered to obtain an inkjet ink (each of inks 1 to 13 and C1 to C4).

<<Evaluation of Inkjet Ink>>

<Textile for Evaluation>

Using a simple print tester equipped with a KM1024i head, a cotton satin was printed with the pretreatment liquid, the inkjet ink, and the posttreatment liquid prepared as described above, sequentially. As an image, a 100% solid image of 200 mm × 200 mm was printed on the textile. The printed textile was dried at 150°C for 3 minutes.

<Rubbing Fastness>

The obtained textile for evaluation was subjected to a wet rubbing fastness test using a type I tester in accordance with JIS L0849, and evaluated as follows.
Specifically, on the textile for evaluation, the portion having a length of 100 mm where the image was formed was rubbed back and forth 10 times with a cotton cloth under a load of about 9 N. The wet state of the cotton cloth was set to a wet state of about 100% with the method described in JIS. After rubbing the textile for evaluation with the cotton cloth, the cotton cloth was dried, and the staining of the cotton cloth was evaluated using a gray scale for staining. The evaluation of staining was judged based on the following evaluation criteria, and if the evaluation score was 3 or more, the rubbing fastness was regarded to be within an acceptable range. Table 3 shows the evaluation results of staining.

Evaluation criteria:

    5: Equivalent to grades 3 to 4 or more
    4: Equivalent to grade 3
    3: Equivalent to grades 2 to 3
    2: Equivalent to grade 2
    1: Equivalent to grade less than 2.

<Texture>

The bending stress B-MEAN [gf $\times$ cm$^2$/cm] was measured using a KES-FB2-A pure bending tester (manufactured by KATO TECH CO., LTD.), and the difference $\Delta$B from an untreated textile was calculated. The width of the textile was set to 20 cm. The evaluation of texture was judged based on the following evaluation criteria, and if the evaluation score was 3 or more, the texture was regarded to be within an acceptable range. Table 3 shows the evaluation results of texture.

Evaluation criteria:

5: $\Delta$B $\leq$ 0.06
4: $\Delta$B $\leq$ 0.09
3: $\Delta$B $\leq$ 0.12
2: $\Delta$B $\leq$ 0.15
1: $\Delta$B > 0.15.

<Droplet Formability>

In an environment of an environmental temperature and humidity of 20°C and 40 %RH, the ink was introduced into a KM1024i head, and then the droplet formability (stability of droplet formation) was evaluated by continuous discharge evaluation. The evaluation of droplet formability was judged based on the following evaluation criteria, and if the evaluation score was 3 or more, the droplet formability was regarded to be within an acceptable range. The term "main droplet deflection" in the following criteria means a phenomenon in which a main droplet does not stay at a fixed position but swings up and down. Table 3 shows the evaluation results of droplet formability.

Evaluation criteria:

5: Droplet formation is stable
4: Droplet formation is stable although slight satellite occurs
3: Droplet formation is at an allowable level although slight satellite and slight main droplet deflection occur
2: Droplet formation is slightly unstable with occurrence of satellite and main droplet deflection
1: Droplet formation is unstable with occurrence of satellite and main droplet deflection.

<Droplet Recoverability>

In a standard environment of an environmental temperature and humidity of 20°C and 40 %RH, the ink was introduced into a KM1024i head, and then the droplet recoverability was evaluated by the discharge recoverability after leaving the ink in a state of being not moisturized for 10 minutes. The evaluation of droplet recoverability was judged based on the following evaluation criteria, and if the evaluation score was 3 or more, the droplet recoverability was regarded to be within an acceptable range. The term "discharge operation" in the following criteria means an operation of discharging an ink, and was performed at 200 discharges $\times$ 10 times. The term "short discharge operation" is specifically performed at less than 200 discharges $\times$ 10 times. Table 3 shows the evaluation results of droplet recoverability.

Evaluation criteria:

5: All of nozzles are recovered by short discharge operation
4: All of nozzles are recovered by discharge operation
3: All of nozzles are recovered by simple maintenance
2: All of nozzles are recovered by purge maintenance
1: There is a nozzle that is not recovered by purge maintenance.

<Ink Storage Stability>

The viscosity of the ink after storage at 50°C for 14 days was measured with an E-type viscometer, the difference in viscosity from an ink stored at room temperature was calculated, and the ink storage stability was evaluated. The ink storage stability was judged based on the following evaluation criteria, and if the evaluation score was B or higher, the ink storage stability was regarded to be within an acceptable range. Table 3 shows the evaluation results of ink storage stability.

Evaluation criteria:

A $^{++}$: Ink viscosity variation is less than $\pm 0.1$ mPa·s

A$^+$: Ink viscosity variation is 0.1 mPa·s or more and less than $\pm 0.2$ mPa·s

A: Ink viscosity variation is $\pm 0.2$ mPa·s or more and less than $\pm 0.3$ mPa·s

B: Ink viscosity variation is $\pm 0.3$ mPa·s or more and less than 0.5 mPa·s

C: Ink viscosity variation is 0.5 mPa·s or more.

Table 1

| | | Solidcontent concentration | Octanol/water partition coefficient | Example 1 | Example 2 | Example 3 | Example 4 | Example 5 | Example 6 | Example 7 | Example 8 | Example 9 |
|---|---|---|---|---|---|---|---|---|---|---|---|---|
| | | | | Ink 1 | Ink 2 | Ink 3 | Ink 4 | Ink 5 | Ink 6 | Ink 7 | Ink 8 | Ink 9 |
| Pigment | Magenta pigment dispersion liquid | 30% | | 10.0% | 10.0% | 10.0% | 10.0% | 10.0% | 10.0% | 10.0% | 10.0% | 10.0% |
| Resin | Aqueous urethane resin dispersion 1 (bifunctional and trifunctional) | 30% | | 16.5% | 16.5% | 33.3% | 50.0% | 66.6% | 33.3% | 33.3% | 33.3% | |
| | Aqueous urethane resin dispersion 2 (bifunctional and tetrafunctional) | 30% | | | | | | | | | | 33.3% |
| | Aqueous urethane resin dispersion 3 (only bifunctional) | 30% | | | | | | | | | | |
| | Aqueous urethane resin dispersion 4 (only tetrafunctional) | 30% | | | | | | | | | | |
| Non-glycol solvent | Glycerin (boiling point 290°C) | | | 10.0% | 10.0% | 10.0% | 10.0% | 10.0% | 10.0% | 10.0% | 10.0% | 10.0% |
| | 2-Pyrrolidone (boiling point 245°C) | | | 15.0% | | | | | | | | |

EP 4 717 718 A1

(continued)

| | | Solidcontent concentration | Octanol/water partition coefficient | Example 1 | Example 2 | Example 3 | Example 4 | Example 5 | Example 6 | Example 7 | Example 8 | Example 9 |
|---|---|---|---|---|---|---|---|---|---|---|---|---|
| | | | | Ink 1 | Ink 2 | Ink 3 | Ink 4 | Ink 5 | Ink 6 | Ink 7 | Ink 8 | Ink 9 |
| Glycol solvent | Propylene glycol (boiling point 188°C) | | -0.92 | | 15.0% | 15.0% | 15.0% | 10.0% | 5.0% | 5.0% | 5.0% | 5.0% |
| | Triethylene glycol (boiling point 285°C) | | -1.98 | | | | | | 10.0% | | | |
| | Tetraethylene glycol (boiling point 314°C) | | -2.02 | | | | | | | 10.0% | | |
| | Polyethylene glycol 200 (boiling point > 200°C) | | -2.02 | | | | | | | | 10.0% | 10.0% |
| Activator | E1010 | | | 0.1% | 0.1% | 0.1% | 0.1% | 0.1% | 0.1% | 0.1% | 0.1% | 0.1% |
| Antiseptic | Proxel GXL(S) | | | 0.1% | 0.1% | 0.1% | 0.1% | 0.1% | 0.1% | 0.1% | 0.1% | 0.1% |
| | Ion-exchanged water | | | 48.3% | 48.3% | 31.5% | 14.8% | 3.2% | 31.5% | 31.5% | 31.5% | 31.5% |
| | Total | | | 100.0% | 100.0% | 100.0% | 100.0% | 100.0% | 100.0% | 100.0% | 100.0% | 100.0% |
| | Urethane resin [%] | | | 5.0% | 5.0% | 10.0% | 15.0% | 20.0% | 10.0% | 10.0% | 10.0% | 10.0% |
| | Amount of organic solvent [%] | | | 25.0% | 25.0% | 25.0% | 25.0% | 20.0% | 25.0% | 25.0% | 25.0% | 25.0% |
| | Ratio of organic solvent/ urethane resin | | | 5.1 | 5.1 | 2.5 | 1.7 | 1.0 | 2.5 | 2.5 | 2.5 | 2.5 |

Table 2

| | | Solid content concentration | Octanol/water partition coefficient | Example 10 | Example 11 | Example 12 | Example 13 | Comparative Example 1 | Comparative Example | Comparative Example 3 | Comparative Example 4 |
|---|---|---|---|---|---|---|---|---|---|---|---|
| | | | | Ink 10 | Ink 11 | Ink 12 | Ink 13 | Ink C1 | Ink C2 | Ink C3 | Ink C4 |
| Pigment | Magenta pigment dispersion liquid | 30% | | 10.0% | 10.0% | 10.0% | 10.0% | 10.0% | 10.0% | 10.0% | 10.0% |
| Resin | Aqueous urethane resin dispersion 1 (bifunctional and trifunctional) | 30% | | 66.6% | 33.3% | 26.7% | 26.7% | 33.3% | 50.0% | | |
| | Aqueous urethane resin dispersion 2 (bifunctional and tetrafunctional) | 30% | | | | | | | | | |
| | Aqueous urethane resin dispersion 3 (only bifunctional) | 30% | | | | | | | | 33.3% | |
| | Aqueous urethane resin dispersion 4 (only tetrafunctional) | 30% | | | | | | | | | 33.3% |
| Non-glycol solvent | Glycerin (boiling point 290°C) | | | 10.0% | 10.0% | 10.0% | 10.0% | 5.0% | 10.0% | 10.0% | 10.0% |
| | 2-Pyrrolidone (boiling point 245°C) | | | | | | | | | | |

EP 4 717 718 A1

29

| | | Solid content concentration | Octanol/water partition coefficient | Example 10 | Example 11 | Example 12 | Example 13 | Comparative Example 1 | Comparative Example | Comparative Example 3 | Comparative Example 4 |
|---|---|---|---|---|---|---|---|---|---|---|---|
| | | | | Ink 10 | Ink 11 | Ink 12 | Ink 13 | Ink C1 | Ink C2 | Ink C3 | Ink C4 |
| Glycol solvent | Propylene glycol (boiling point 188°C) | | -0.92 | | | | 5.0% | | | 15.0% | 15.0% |
| | Triethylene glycol (boiling point 285°C) | | -1.98 | | 15.0% | 15.0% | | | | | |
| | Tetraethylene glycol (boiling point 314°C) | | -2.02 | | | | | | | | |
| | Polyethylene glycol 200 (boiling point > 200°C) | | -2.02 | 10.0% | | | 10.0% | | | | |
| Activator | E1010 | | | 0.1% | 0.1% | 0.1% | 0.1% | 0.1% | 0.1% | 0.1% | 0.1% |
| Antiseptic | Proxel GXL(S) | | | 0.1% | 0.1% | 0.1% | 0.1% | 0.1% | 0.1% | 0.1% | 0.1% |
| | Ion-exchanged water | | | 3.2% | 31.5% | 38.1% | 38.1% | 51.5% | 29.8% | 31.5% | 31.5% |
| | Total | | | 100.0% | 100.0% | 100.0% | 100.0% | 100.0% | 100.0% | 100.0% | 100.0% |
| | Urethane resin [%] | | | 20.0% | 10.0% | 8.0% | 8.0% | 10.0% | 15.0% | 10.0% | 10.0% |
| | Amount of organic solvent [%] | | | 20.0% | 25.0% | 25.0% | 25.0% | 5.0% | 10.0% | 25.0% | 25.0% |
| | Ratio of organic solvent/ urethane resin | | | 1.0 | 2.5 | 3.1 | 3.1 | 0.5 | 0.7 | 2.5 | 2.5 |

EP 4 717 718 A1

Table 3

| | Ink | Urethane resin | Print quality | | Ejection stability | | Ink storage stability |
|---|---|---|---|---|---|---|---|
| | | | Rubbing fastness | Texture | Droplet formability | Droplet recoverability | |
| Example 1 | Ink 1 | Urethane resin 1 | 4 | 5 | 3 | 3 | B |
| Example 2 | Ink 2 | Urethane resin 1 | 4 | 5 | 4 | 4 | B |
| Example 3 | Ink 3 | Urethane resin 1 | 5 | 4 | 4 | 4 | B |
| Example 4 | Ink 4 | Urethane resin 1 | 5 | 4 | 3 | 3 | B |
| Example 5 | Ink 5 | Urethane resin 1 | 5 | 3 | 3 | 3 | B |
| Example 6 | Ink 6 | Urethane resin 1 | 5 | 4 | 5 | 4 | A |
| Example 7 | Ink 7 | Urethane resin 1 | 5 | 4 | 5 | 5 | A$^+$ |
| Example 8 | Ink 8 | Urethane resin 1 | 5 | 4 | 5 | 5 | A$^+$ |
| Example 9 | Ink 9 | Urethane resin 2 | 5 | 4 | 5 | 5 | A$^{++}$ |
| Example 10 | Ink 10 | Urethane resin 1 | 5 | 3 | 4 | 4 | B |
| Example 11 | Ink 11 | Urethane resin 1 | 5 | 4 | 5 | 5 | A$^+$ |
| Example 12 | Ink 12 | Urethane resin 1 | 5 | 4 | 5 | 5 | A$^{++}$ |
| Example 13 | Ink 13 | Urethane resin 1 | 5 | 4 | 5 | 5 | A$^{++}$ |
| Comparative Example 1 | Ink C1 | Urethane resin 1 | 5 | 4 | 4 | 1 | B |
| Comparative Example 2 | Ink C2 | Urethane resin 1 | 5 | 4 | 3 | 2 | B |
| Comparative Example 3 | Ink C3 | Urethane resin 3 | 2 | 5 | 2 | 4 | C |
| Comparative Example 4 | Ink C4 | Urethane resin 4 | 5 | 2 | 4 | 4 | B |

Although embodiments of the present invention have been described and illustrated in detail, the disclosed embodiments are made for purposes of illustration and example only and not limitation. The scope of the present invention should be interpreted by terms of the appended claims.

The present application is based on Japanese Patent Application No. 2024-168275, filed on September 27, 2024, and Japanese patent application No. 2024-168278, filed on September 27, 2024, the disclosures of which are incorporated herein by reference in their entirety.

**Claims**

1.   An inkjet ink comprising:

a urethane resin including a constituent unit derived from (A) polyisocyanate, a constituent unit derived from (B) polyol, and a constituent unit derived from (C) polyamine; and
an organic solvent,

wherein,

(B) the polyol includes (B1) polyether polyol and (B2) diol compound having a carboxy group and/or a carboxylate group,
(C) the polyamine includes (C1) first polyamine having two groups selected from an amino group, an imino group, and a hydrazide group and (C2) second polyamine having three or four groups selected from an amino group, an imino group, and a hydrazide group,
a mass ratio of the organic solvent to the urethane resin (a ratio of a mass of the organic solvent to a mass of the urethane resin) is 1.0 or more.

2. The inkjet ink according to claim 1, a content of the urethane resin is 5 mass% or more and 20 mass% or less with respect to a total mass of the inkjet ink.

3. The inkjet ink according to claim 1 or 2, wherein the organic solvent contains a glycol-based solvent.

4. The inkjet ink according to claim 1 or 2, wherein the organic solvent contains a glycol-based solvent having an octanol/water partition coefficient of -1.80 or less.

5. The inkjet ink according to claim 1 or 2, a content of the organic solvent is 10 mass% or more and 50 mass% or less with respect to the total mass of the inkjet ink.

6. The inkjet ink according to claim 1 or 2, further comprising a colorant,
a mass ratio of the colorant to the urethane resin (a ratio of a mass is the colorant to the mass of the urethane resin) of 0.05 to 2.0.

7. The inkjet ink according to claim 1 or 2, wherein the urethane resin has an acid value of 5 mgKOH/g or more and less than 30 mgKOH/g.

8. The inkjet ink according to claim 1 or 2, wherein the second polyamine includes diethylenetriamine or triethylenetetramine.

9. The inkjet ink according to claim 1 or 2, wherein the polyether polyol includes polytetramethylene glycol.

10. The inkjet ink according to claim 1 or 2, wherein the urethane resin has a glass transition temperature of 0°C or lower.

11. The inkjet ink according to claim 1 or 2, wherein it is used for textile printing on a textile.

Europäisches
Patentamt
European
Patent Office
Office européen
des brevets

# EUROPEAN SEARCH REPORT

**Application Number**

EP 25 20 4213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 353 788 A1 (DAINIPPON INK & CHEMICALS [JP]) 17 April 2024 (2024-04-17) * Production Example 7 referring back to Production Example 1 * ----- | 1-11 | INV. C08G18/08 C08G18/12 C08G18/32 C08G18/48 C08G18/75 C09D11/30 |
| X | US 2023/323010 A1 (YAMASHITA TATSUYA [JP] ET AL) 12 October 2023 (2023-10-12) * example 7; table 2 * ----- | 1-11 | |

**TECHNICAL FIELDS SEARCHED (IPC)**

C09D
C08G

The present search report has been drawn up for all claims

| Place of search | Date of completion of the search | Examiner |
|---|---|---|
| Munich | 4 February 2026 | Bergmeier, Martin |

EPO FORM 1503 03.82 (P04C01)

## ANNEX TO THE EUROPEAN SEARCH REPORT
## ON EUROPEAN PATENT APPLICATION NO.

EP 25 20 4213

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | Publication date |
|---|---|---|---|---|
| EP 4353788 | A1 | 17-04-2024 | CN 117580916 A | 20-02-2024 |
| | | | EP 4353788 A1 | 17-04-2024 |
| | | | JP 7332071 B2 | 23-08-2023 |
| | | | JP WO2023032689 A1 | 09-03-2023 |
| | | | US 2024352180 A1 | 24-10-2024 |
| | | | WO 2023032689 A1 | 09-03-2023 |
| US 2023323010 | A1 | 12-10-2023 | CN 116209807 A | 02-06-2023 |
| | | | EP 4206399 A1 | 05-07-2023 |
| | | | JP 7522838 B2 | 25-07-2024 |
| | | | JP WO2022045245 A1 | 03-03-2022 |
| | | | KR 20230039709 A | 21-03-2023 |
| | | | TW 202219101 A | 16-05-2022 |
| | | | US 2023323010 A1 | 12-10-2023 |
| | | | WO 2022045245 A1 | 03-03-2022 |

EPO FORM P0459

For more details about this annex : see Official Journal of the European Patent Office, No. 12/82

**EP 4 717 718 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6776775 B
- JP 2020084013 A
- JP 2018015974 A
- JP 2024168275 A
- JP 2024168278 A